(19) Europäisches Patentamt
European Patent Office
Office européen des brevets

(11) Publication number: 0 330 752 B1

(12) **EUROPEAN PATENT SPECIFICATION**

(45) Date of publication of patent specification: **02.03.94**

(51) Int. Cl.$^5$: **C21D 8/06**, C22C 38/00

(21) Application number: **88121043.9**

(22) Date of filing: **15.12.88**

# (54) Superhigh-strength superfine wire, and reinforcing materials and composite materials incorporating the same.

(30) Priority: **29.02.88 JP 48397/88**
**29.02.88 JP 48398/88**

(43) Date of publication of application:
**06.09.89 Bulletin 89/36**

(45) Publication of the grant of the patent:
**02.03.94 Bulletin 94/09**

(84) Designated Contracting States:
**BE DE FR GB IT SE**

(56) References cited:
**EP-A- 0 152 160**
**EP-A- 0 176 139**
**EP-A- 0 213 917**
**WO-A-86/01231**
**GB-A- 1 352 761**
**US-A- 4 067 756**
**US-A- 4 613 385**

**PATENT ABSTRACTS OF JAPAN**

(73) Proprietor: **KABUSHIKI KAISHA KOBE SEIKO SHO**
**3-18 Wakinohama-cho 1-chome**
**Chuo-ku**
**Kobe 651(JP)**

(72) Inventor: **Yutori, Toshiaki**
**1174-110 Yoneda**
**Yoneda-cho**
**Takasago-shi Hyogo-ken(JP)**
Inventor: **Katumata, Masaaki 616-29, Iawaoka**
**Iwaoka-cho**
**Nishi-ku**
**Kobe-shi Hyogo-ken(JP)**
Inventor: **Koide, Kenji 1650-3, Arise**
**Ikawadani-cho**
**Nishi-ku**
**Kobe-shi Hyogo-ken(JP)**
Inventor: **Kanetuki, Yutaka**
**7-3-623, Takamaru**
**Tarumi-ku**
**Kobe-shi Hyogo-ken(JP)**
Inventor: **Kitagawa, Yoshihisa E6006,**
**10-6,2-chome**
**Kitaohgi**
**Higashinada-ku**
**Kobe-shi Hyogo-ken(JP)**

(74) Representative: **Thomsen, Dieter, Dr.**
**Patentanwalt**
**Postfach 70 19 29**
**D-81319 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 330 752 B1

## Description

The invention relates to a superhigh-strength superfine wire having a high fatigue strength, a diameter of 160 µm or below, a strength of 300 kgf/mm$^2$ or above; and to reinforcing materials and composite materials incorporating the wire, having minute, composite fibrous structure consisting of continuous ferrite and a continuous low-temperature transformed phase.

In the following description, "suberfine wire" refers to a steel wire formed through cold drawing and having a diameter of ≦ 160 µm, preferably ≦ 100 µm. The superfine wire is used in individual wires, threads, wire strands and woven fabric for forming mechanical cutting saws, precision springs, superhigh-pressure hoses for jetting water, precision control cables and reinforcing materials for composite materials, such as FRPs and FRMs, steel tire cords for pneumatic tires, and metal-coated wires for electrical discharge machining.

In the recent semiconductor manufacturing process, wire saws have replaced disk cutters which have been used for slicing a block of single crystal silicon into wafers. Figs. 1 and 2 shows an automatic wire saw using a cutting wire for producing silicon wafers. In cutting a workpiece on the automatic wire saw, the cutting wire is pressed against the workpiece immersed a cooling liquid containing abrasive grains or being cooled by a pouring cooling liquid containing abrasive grains, and the cutting wire is driven for running at a high running speed. This cutting wire, in general, is a piano wire or a brass-plated or copper-plated piano wire. This wire is required to have reliability over a long length in the range of 40 to 60 km, a high tensile strength and a very small diameter.

Shown in Figs. 1 and 2 are a wire saw 1, a wire 2, a feed bobbin 3 for feeding the wire 2 to the right, as viewed in Fig. 2, a winding bobbin 4 for winding the wire 2, dancer rollers 5 for regulating the tension of the wire 2, traverse rollers 6 and guide rollers 7.

Three cylindrical, grooved rollers 8, 9 and 10 are disposed on vertexes of a triangle between the guide rollers 7. Helical guide grooves are formed in the respective circumferences of the grooved rollers 8, 9 and 10, and the wire 2 is wound along the helical guide grooves around the grooved rollers 8, 9 and 10. A portion of the wire 2 between the front grooved roller 9 and the back grooved roller 10 extends within a chamber 12. The chamber 12 contains a cooling liquid 13 containing abrasive grains. A work table 14 is provided vertically movably within the chamber 12. A workpiece, namely, a single crystal silicon block, 15 is mounted on the work table 14. The wire 2 is extended between the front grooved roller 9 and the back grooved roller 10 in tens to hundreds of rows axially of the workpiece 15 and the wire 2 of 40 to 60 km in total length is fed continuously to cut the workpiece 15 simultaneously at a plurality of positions.

However, the conventional wire saw using a piano wire leaves much open for improvement in respect of machining accuracy, machining speed and yield loss. The conventional wire saw needs extensive improvement to answer request for mass production and cost reduction.

An increased tension must be applied to the wire to improve machining accuracy and machining speed, and hence the wire must have a sufficiently high tensile strength. The tensile strength of the conventional piano wire is in the order of 200 to 280 kgf/mm$^2$, and hence a wire having a tensile strength far greater than that of the piano wire must be used.

To reduce yield losses, wires having smaller diameters must be used. Use of wires having smaller diameters reduce effectively adverse influences on a cut surface and the work. Conventional piano wires used in wire saws have diameters in the range of 140 to 300 µm and, in general, 160 µm or above. Technical reasons demonstrate the demand to use wires having the smallest possible diameters, e.g. ≦ 160 µm, preferably ≦ 100 µm.

From EP 0 213 917-A2 high strength low carbon steel wire rods of enhanced cold drawing property are known having a composite structure in which an acicular low temperature transformation phase, comprising a martensite, bainite and/or the mined structure thereof which has

C : 0,02 - 0,30 weight-%,
Si: less than 2,5 weight-%,
Mn: less than 2,5 weight-%,

the balance of iron and inevitable impurities and incidental constituents and which may partially contain retained austenite, is uniformly dispersed at the volume ratio of from 10 to 70 % in the ferrite phase, and in which the weight of (C + N) in solution in the ferrite phase is less than 40 ppm.

The continuous and advantageous developments in the various technical fields create further technical demands to permanently improve technical materials as to their physical data and their possible application forms; and this demand defines the object of the present invention.

According to the invention this object is solved by the present claim 1, i.e. a superhigh-strength superfine wire of 160 µm (diameter) or below and of a strength of 300 kgf/mm$^2$ or above, having a composite phase of ferrite and a low-temperature transformed phase of martensite, bainite or a mixture of martensite and bainite, composed of 0.01 to 0.50 weight-% of C, 1.5 weight-% or less of Si, 5.0 weight-% or less of Mn, and containing optionally
one of Nb, V and Ti in an amount of ≧ 0,005 to 0,5%
and/or 18% or below of Cr
and/or 2,0% or below of Cu
and/or 2,0% or below of Mo
and/or 8% or below of Ni
and/or 0,1% or below of Al
and/or 0,o2% or below of B
and/or trace amounts of Ca
and/or trace amounts of Ce,
the balance being iron, and inevitable impurities,
and having a fibrous microstructure consisting of fibers in unidirectional arrangement of microcells with sizes (width) in the range of 0,5 to 10 nm formed by hard drawing at a reduction ratio of ≧ 99 %, the fibers being arranged at intervals in the range of 5 to 100 nm.

The present claim 2 is a particular embodiment wherein the content of hydrogen is ≦ 0,0001 %. A further preferred embodiment is shown in claim 3 wherein the surface of this superhigh-strength superfine wire is coated with a metal, the quantity of the metal being in the range of 1 to 100 g per 1 kg of the superhigh-strength superfine wire. According to claim 4 a reinforcing wire is formed by coating the superhigh-strength superfine wire with a resin. Another preferred embodiment according to claim 5 is the reinforcing material formed by twisting, bundling or weaving a plurality of superhigh-strength superfine wires of claim 3. And this material of claim 5 can preferably be used to provide a composite material formed by coating the reinforcing material with a resin, rubber or a metal.

Use of the superhigh-strength superfine wire of the present invention for forming a superhigh-pressure hose as shown in Fig. 3 for producing a high-pressure high-speed water jet for simultaneous cutting of concrete and reinforcing bars in pulling down a building, removal of scales in a rolling line and cutting soft, flexible materials such as disposable diapers is another application.

In Fig. 3, indicated at 21 is a superhigh-pressure hose comprising a resin inner tube 22, a reinforcing layer 23 consisting of a plurality of spiral windings of a reinforcing material 23a wound around the resin inner tube 22, and a resin housing 24 covering the reinforcing layer 23.

In pulling down a building, concrete and reinforcing bars are cut simultaneously by a high-pressure, high-speed water jet. A superhigh pressure hose having a pressure capacity of 4000 $kgf/cm^2$ or above is necessary for producing such a water jet. Generally, such a superhigh pressure hose has a construction as shown in Fig. 3. A higher-carbon steel wire (piano wire) having a diameter in the range of 0.2 to 0.5 mm is used generally for forming the reinforcing layer.

In view of the purpose and safety in use, the high-pressure hose must have a sufficiently high pressure capacity and sufficiently high durability. Recently, high-pressure hoses having a pressure capacity in the range of 8000 to 10,000 $kgf/cm^2$ have been required. Since the tensile strength of the piano wire is 300 $kgf/mm^2$ or below, the maximum pressure capacity of the conventional high-pressure hose is in the order of 5500 $kgf/cm^2$ and the life of the high-pressure hose is merely ten hours or so, and hence the conventional high-pressure hose is unable to meet the foregoing requirements.

According to the present invention the known wires, i.e. pearlitic ferrite wires and conventional tempered martensite wires, have been replaced; wires having a composite structure consisting of predetermined chemical components and having a ferrite phase and a minute low-temperature transformed phase of acicular bainite, which may contain residual austenite, martensite or a mixed structure of acicular bainite and martensite, dispersed uniformly in a ferrite phase have some hard workability. Such a wire is disclosed in Japan. Patent Laid-open (Kokai) Nos. 61-56264, 62-20824, 62-50408, 62-50414 and 62-50436, U.S. Pat. No. 4,578,124 and U.S. Pat. Application No. 895,869.

It has been found, however, that steel wires, among those formed by cold-drawing the foregoing wire of 3,5 mm or below in diameter having the composite structure at a hard drawing ratio of 99 % or above to a diameter below 160 µm, having a fibrous minute metallic structure consisting of fibres each consisting of a unidirectional arrangement of microcells of 5 to 100Å and arranged at intervals in the range of 50 to 1000Å have a very high strength in the range of 400 to 600 $kgf/mm^2$.

The structure of the wire before the hard working of 99 % or above is mentioned in prior publications, e.g. US Patent 4 067 756 which discloses a steel plate having a similar structure. This structure, however, has a Si content of 2 % or above, which is higher than that of the wire of the present invention. Therefore, the structure of US Patent 4 067 756 is inferior in drawing workability and hence is unable to withstand hard working of 99 % or above, because the ferritic structure and martensitic grains of the structure are large. Furthermore, the Si content is high and thus the steel of US patent 4 067 756 is subject to decarburization; the surface of this known steel is not quenched by heat treatment for forming a composite structure therein; no composite structure is formed, and a ferritic layer is formed only in the surface of the steel, which affects adversely to increasing the strength of the steel.

The prior art does not mention any superfine wire according to the present invention, e.g. having a diameter of 160 µm or below, having a structure in which fibers consisting of unidirectional arrangement of microcells of 0,5 to 10 nm, formed by hard working, are arranged at intervals of 5 to 100 nm and having a strength in the range of 400 to 600 kgf/mm$^2$ which is a preferred embodiment.

Furthermore, although metallic wires such as piano wires and stainless steel wires which have been used for practical purposes are drawn in a diameter of 50 to 100 µm, the strength of such metallic wires is in the order of 300 kgf/mm$^2$ at the highest; and although a fibrous structure is formed in those metallic wires by drawing, the fibres are arranged at intervals in the range of 2 to 20 µm and the size of the cells is not less than 0.2 to 2 µm.

Thus the present invention provides a superhigh-strenth superfine wire having a diameter of 160 µm or below and a tensile strength in the range of 400 to 600 kgf/mm$^2$. The wire has high reliability in bending strength, shearing strength and torsional strength, high toughness, and excellent resistance to stress relaxation and fatigue strength; and furthermore the wire is less subject to deterioration by heat and it is free from reduction in strength when it is heated at a temperature below 400° C. The wire is capable of meeting diversified requirements, such as capable of being easily drawn to a diameter of 20 µm or below in a length in the range of 40 to 60 km, capable of beeing formed in various shapes for various purposes, strands and woven fabric, and capable of being processed for surface coating and plating processes for rust prevention, lubrication, acid-proofing and improving adhesion to different materials.

To clearly demonstrate the advantages of the present invention, superfine wires of the invention and conventional wires and filaments will be compared in physical properties.

The physical properties of the superfine wires (designated as "superfine metal" in Table 1) and conventional high-strength wires and a filament are shown in Table 1. As is obvious from Table 1, the microfine wires of the present invention are as high in toughness as a stainless steel wire and far higher than the rest of the conventional wires, and have extraordinarily high tensile strength.

Table 1

| Wires | Superfine | Superfine | Superfine | Piano |
|---|---|---|---|---|
| Density ($g/cm^3$) | 7.8 | 7.8 | 7.8 | 7.8 |
| Diameter (μm) | 25 | 50 | 100 | 100 |
| Tensile strength ($kgf/mm^2$) | 475 | 425 | 400 | 300 |
| Elastic modulus ($kgf/mm^2$) | 20000 | 20000 | 20000 | 20000 |
| Elongation (%) | 4.0 | 4.2 | 4.5 | 3.2 |
| Breaking reduction of area (%) | 53 | 57 | 55 | 51 |

| Wires | Stainless steel | Amorphous | Tungsten | Alamid |
|---|---|---|---|---|
| Density ($g/cm^3$) | 7.8 | 7.6 | 19.4 | 1.4 |
| Diameter (μm) | 50 | 50 | 50 | 12 |
| Tensile strength ($kgf/mm^2$) | 270 | 370 | 320 | 300 |
| Elastic modulus ($kgf/mm^2$) | 18000 | 16000 | 40500 | 7100 |
| Elongation (%) | 3.2 | 4.0 | - | 4.4 |
| Breaking reduction of area (%) | 60 | < 5 | < 5 | < 5 |

The respective tensile strengths of the 50 μm diameter superfine wire , the 100 μm diameter stainless steel wire and the 50 μm diameter amorphous wire shown in Table 1 were measured after heating those wires at different temperatures in the range of room temperature to 450 °C for 30 min. in air. The measured results are shown in Fig. 4. As is obvious from Fig. 4, the tensile strength of the superfine wire of the present invention was not reduced at all by heat treatment in the foregoing temperature range and the toughness of the same did not change.

Fig. 5 shows a $\sigma$-N curve for the 100 μm diameter superfine wire shown in Table 1 obtained through Hunter's fatigue tests. As is obvious from Fig. 5, the ratio of fatigue limit to tensile strength (strength ratio) of the superfine wire is 0.38, which proves that the superfine wire has a high fatigue strength.

Fig 6 shows the stress relaxation characteristics of the 60 μm diameter superfine wire shown in Table 1 when a tensile force corresponding to 85% of the tensile strength of the same wire was applied to the same wire. The stress loss was not more than 2%.

It is obvious from Figs. 5 and 6 that the superfine wires of the present invention have high reliability in dynamic and static properties.

Fig. 7 is an enlarged view of the broken end of the 50 µm diameter superfine wire shown in Table 1 broken by stretching, and Fig. 8 is an enlarged view of a bent portion of the same superfine wire. As is obvious from Fig. 7, the superfine wire is drawn greatly before breakage and the contraction in area of the broken end of the superfine wire is very large (contraction in area is not less than 50%). As is obvious from Fig. 8, the superfine wire is not cracked at all in the kink, which proves that the superfine wire has high toughness.

The foregoing facts prove that the superfine wires of the present invention have extraordinarily excellent characteristics exceeding those of the conventional metallic wires and including characteristics similar to those of organic filaments. Accordingly, the superfine wires of the present invention can be used single, in strands, in woven fabric, and in combination with organic filaments or inorganic filaments or wires, such as SiC whiskers, carbon fibers, aluminum wires and/or other metallic wires, for forming strands and woven fabric. Thus, the superfine wires of the present invention are applicable as composite materials or reinforcing materials to forming FRPs and FRMs.

BRIEF DESCRIPTION OF THE DRAWINGS

Figure 1 is a schematic sectional view of assistance in explaining the configuration of a wire saw;

Figure 2 is a diagrammatic illustration of assistance in explaining the running path of a wire in the wire saw of Fig. 1;

Figure 3 is a perspective view showing the construction of a superhigh-pressure hose;

Figure 4 is a graph showing the variation of tensile strength of a superfine wire of the present invention with temperature at which the superfine wire is held, in comparison with that of conventional wires;

Figure 5 is a graph showing the $\sigma$-N characteristics of a superfine wire of the present invention;

Figure 6 is graph showing the stress relaxation characteristics of a superfine wire of the present invention;

Figure 7 is an enlarged typical illustration of the broken end of a 50 µm diameter superfine wire of the present invention broken by stretching;

Figure 8 is an enlarged typical illustration of a kink in a 50 µm diameter superfine wire of the present invention;

Figure 9 is a microscopic photograph of a superfine wire of the present invention formed by drawing a wire of a composite structure having an acicular low-temperature transformed phase, taken by a scanning electron microscope at a magnification of 3000;

Figure 10 is a microscopic photograph of the superfine wire of Fig. 9 taken by a scanning electron microscope at a magnification of 10,000;

Figure 11 is a photograph of the superfine wire of Fig. 9 taken by an 3MV extrahigh-voltage transmission electron microscope;

Figure 12 is a graph showing the variation of tensile strength with drawing strain of wires of different structures;

Figure 13 is a microscopic photograph showing the structure of a superfine wire of the present invention formed by drawing a wire of a composite structure having acicular and globular low-temperature transformed phases taken by a scanning electron microscope at a magnification of 3000;

Figure 14 is a microscopic photograph of the superfine wire of Fig. 13 taken by a scanning electron microscope at a magnification of 10,000;

Figure 15 is a microscopic photograph showing the structure of a superfine wire as a control formed by drawing a wire of a composite structure having acicular and globular low-temperature transformed phases, taken by a scanning electron microscope at a magnification of 3000;

Figure 16 is a microscopic photograph showing the structure of a superfine wire of the present invention formed by drawing a wire of a composite structure having a globular low-temperature transformed phase taken by a scanning electron microscope at a magnification of 3000;

Figure 17 is a microscopic photograph showing the structure of a superfine wire as a control formed by drawing a wire of a composite structure having a globular low-temperature transformed phase taken by a scanning electron microscope at a magnification of 3000;

Figure 18 is a microscopic photograph showing the structure of a superfine wire as a control having a globular structure taken by a scanning electron microscope at a magnification of 3000;

Figure 19 is a graph showing the rusting characteristics of a Ni-plated superfine wire of the present invention and a conventional superfine wire as a control under a high temperature and a high humidity ;

Figure 20 is a graph showing the relation between the thickness of plated layer on a superfine wire and the corrosion resistance of the superfine wire obtained by a salt water spray test;

Figure 21 is sectional views of tire cords formed of superfine wires of the present invention; and

Figure 22 is a graph comparatively showing the corrosion resistances of a tire cord formed of superfine wires of the present invention and those formed of conventional superfine wires.

Further details of the invention are as follows. A particular embodiment of the superfine wire is explained, i.e. at first with respect to the chemical composition.

The C content in the range of 0.01 to 0.50 % serves to form the fibrous microstructure.

Si is an effective element for reinforcing ferrite. However, when the Si content exceeds 3.0 %, the transformation temperature is increased greatly and decarburization is liable to occur in the surface of the wire. According to the invention, the upper limit of the Si content is 1.5 %.

Mn enhances the strength of the superfine wire and improves the hardenability of the second phase. Those effects of Mn saturate at Mn content of 5.0 %. According to the invention the upper limit of the Mn content is 5.0 %.

H is a detrimental element which embrittles steels. The higher the strength of steels, the greater is the detrimental embrittling influence of H. In accordance with the present invention, the H content should be preferably 0.0001 % (1 ppm) or below, more preferably 0.00005 % (0.5 ppm) or below. The reduction of H content may be carried out at any stage of the manufacturing process from a steel melting stage to the final superfine wire forming stage. Degassing of molten steel, cooling after hot rolling and heat treatment of the wire and low-temperature dehydrogenating annealing are effective means for reducing the H content.

Although the strength of the material is influenced by various factor, e.g. the H-content, the C + N-value, the drawing ratio etc. (mutual influences of the factors), an influence of H can be demonstrated clearly by a corresponding experiment; thus the effect of hydrogen on the strength of superfine wires is shown in Table 2 for reference.

Superfine wires A, B and C shown in Table 2 are formed by reducing the diameter of a 1.5 mm diameter steel wire having the composition and structure of steel No. 1 to a diameter of 59 µm by drawing. The superfine wire A is a reference superfine wire formed by drawing the 1.5 mm diameter steel wire after cooling and pickling, the superfine wire B is formed by drawing the 1.5 mm diameter steel wire annealed for low-temperature dehydrogenation before pickling, and the superfine wire C is formed by drawing the 1.5 mm diameter steel wire annealed for dehydrogenation after pickling.

Table 2

| Superfine wires | A | B | C |
|---|---|---|---|
| Volume percentage of low-temperature transformed phase (%) | 46 | 46 | 46 |
| Hydrogen content (ppm) | 1.2 | 0.4 | 0.1 ≧ |
| Maximum strength (kgf/mm$^2$) | 284 | 380 | 438 |

As is obvious from Table 2, the superfine wire A has high hydrogen content and low ductility, and hence the strength thereof is less than 300 kgf/mm$^2$. The superfine wires B and C, which are formed by drawing the 1.5 mm diameter steel wire after low-temperature annealing for dehydrogenation, have low hydrogen content and high strength. The respective (C + N) contents in the ferritic solid solution of the superfine wires B and C are not more than 40 ppm.

The significance of the (C + N) content in the ferritic solid solution will be explained hereinafter. Although the (C + N) content is not an attribute relating to the superfine wire of the present invention, but is an attribute relating to the wire from which the superfine wire is formed, the wire has stable ductility regardless of drawing speed when the (C + N) content in the ferritic solid solution of the wire is 40 ppm or below. When the (C + N) content exceeds 40 ppm, the ductility of the wire deteriorates as the reduction ratio increases and hence it is difficult to provide a high-strength superfine wire having a tensile strength of 300 kgf/mm$^2$ or above.

The material and consequently the wire may contain incidental constituents, e.g. Nb, V and Ti. The Nb, V or Ti content can be 0.005 % or above. Excessive amounts are disadvantageous. Thus the allowable upper limit of Nb, V or Ti content is 0.5 %.

There are also other elements which may be unavoidably contained in the material; their influences and allowable limits are described as follows.

The S content is 0.005 % or below to reduce the quantity of MnS. The reduction of MnS enhances the ductility. The P content is 0.01 % or below because P causes remarkable crystal boundary segregation.

N contained in the solid solution is the most cause of ageing; i.e. N contained in the solid solution causes the ageing of the wire during drawing to deteriorate the workability of the wire or causes the ageing of the superfine wire after drawing to deteriorate the ductility of the superfine wire. Accordingly the N content is ≦ 0.03 %.

Al forms oxide inclusions which deteriorate the ductility of the wire since oxide inclusions are hard to transform. The Al content preferably is ≦ 0.01 %.

When the Si-to-Al ratio is large, silicate inclusions increase. Particularly, silicate inclusions increase sharply with the decrease of the Al content entailing the deterioration of the characteristics of the superfine wire as well as the deterioration of the ductility of the wire. The Si-to-Al ratio is ≦ 1000, preferably ≦ 250.

Rare earth metals, such as Ca and Ce, can take influence on the shape of MnS inclusions.
C and N in the solid solution can be influenced by Nb, V, Ti and/or Al. The wire for forming the superfine wire of the present invention may contain ≦ 18 % Cr, ≦ 2 % Cu, ≦ 2.0 %Mo, ≦ 8 % Ni, ≦ 0,1 % Al, ≦ 0,1 % P and/or ≦ 0,02 % B. Cr and Cu can improve the corrosion resistance of the wire; Mo and Ni can improve the corrosion resistance of the wire and can enhance the strength.

The strucuture of the superfine wire of the present invention will be described as follows.

A wire of 3.5 mm or below in diameter having the foregoing chemical composition is heated at a temperature in the range of 700 to 1100 ° C and cooled (the heating-cooling cycle may be repeated several times) to provide a wire of a composite structure containing 15 to 75% of a low-temperature transformed phase, which may contain some residual austenite, or martensite, bainite, or a mixture of martensite and bainite, uniformly dispersed in ferrite. The method of manufacturing the wire of the composite structure is disclosed in Japanese Patent Laid-open No. 62-20824.

Then, the wire thus obtained is drawn at a reduction ratio of four or above, preferably five or above, to form a continuous minute fibrous structure extending in one direction by combining ferrite and the low-temperature transformed phase. A further minute fibrous structure can be formed by drawing the wire at a higher reduction ratio. A superfine wire of the present invention thus formed is 160 µm or below and 300 kgf/mm$^2$ in strength, in preferable case, 100 µm or below in diameter and 320 to 600 kgf/mm$^2$ in strength. Ordinarily, the lower limit of the diameter of the superfine wire is 5 µm. When the reduction ratio is less than four, a perfect fibrous structure cannot be formed, and hence the strength of the superfine wire is less than 300 kgf/mm$^2$.

Referring to Figs. 9 and 10 showing the fibrous structure of the superfine wire of the present invention thus obtained, white portions are martensite grains and black portions are ferrite grains. Ferritic phase and the low-temperature transformed phase are combined in a unidirectional, continuous, minute fibrous structure, and intervals between the component fibers are in the range of 5 to 100 nm (50 to 1000Å). It is recognized from Fig. 11 that superfine cells of 0.5 to 10 nm (5 to 100Å) in size are formed by hard working.

In accordance with the present invention, the volume percentage of the low-temperature transformed phase in ferrite should be in the range of 15 to 75%. Although a superfine wire of 5 to 500 µm in diameter can be obtained by cold-drawing a wire having such a composite structure even if the volume percentage is less than 15%, the structure of the superfine wire is not perfectly the aforesaid minute fibrous structure, and the strength of such a superfine wire is less than 300 kgf/mm$^2$. On the other hand, when the volume percentage of the low-temperature transformed phase in the ferrite is higher than 75%, the wire is liable to be broken in the drawing process and, even if the wire can be drawn without being broken, the structure of the superfine wire is not a perfect minute fibrous structure and the strength of such a superfine wire is lower than 300 kgf/mm$^2$.

Furthermore, the diameter and volume percentage of the low-temperature transformed phase of a wire for drawing are dependent on the morphology of the low-temperature transformed phase.

That is, when the morphology of the low-temperature transformed phase is substantially acicular, namely, 80% of the low-temperature transformed phase is an acicular structure, the volume percentage of the low-temperature transformed phase is 50% or below and the diameter of the wire is 3.5 mm or below. When the structure of the low-temperature transformed phase is a mixed structure of an acicular structure and a globular structure, the volume percentage of the low-temperature transformed phase is 75% or below and the diameter of the wire is 3.5 mm or below. When the structure of the low-temperature transformed phase is substantially globular, 80% of the low-temperature transformed phase is a globular structure, the volume percentage of the low-temperature transformed phase is 50% or below and the diameter of the wire is 2.0 mm or below. Although there is no particular restriction on the lower limit of the diameter of the wire, in view of the present status of processing technology, the lower limit of the diameter of the wire, in general, is 0.3 mm.

That is, when a wire having a low-temperature transformed phase of a predetermined structure and a predetermined volume percentage is drawn at a reduction ratio of four or above, preferably five or above, a superhigh-strength superfine wire having the aforesaid minute fibrous structure, a strength of 300 $kgf/mm^2$ or above, in a satisfactory case, a strength in the range of 320 to 600 $kgf/mm^2$, and a diameter of 160 $\mu m$ or below, in a satisfactory case, 100 $\mu m$ or below can be obtained. Although a wire not meeting the foregoing conditions may be drawn in a superfine wire, the superfine wire produced by drawing such a wire does not have the aforesaid minute fibrous structure, and hence the strength of the superfine wire is far less than 300 $kgf/mm^2$.

In the foregoing description, "acicular" represents a state in which the arrangement of grains is unidirectional, and "globular" represents a state in which the arrangement of grains is nondirectional.

A superfine wire in another inventive embodiment will be described hereinafter. This superfine wire has excellent rust resistance, corrosion resistance, oxidation resistance, adhesion to metals, heat resistance and lubricating property.

This embodiment of the superfine wire is formed by plating the first mentioned superfine wire. A plating metal amount of 1 to 100 g is used for plating a supfine wire of 1 kg in weight.

The superfine wire must be coated for some uses requiring special characteristics, because the superfine wire of the present invention has properties inherent in steels and hence the superfine wire is inevitably subject to rusting.

A metal for coating the superfine wire is selected by taking into consideration the uses and requisite characteristics of the superfine wire from corrosion-resistant metals, such as Ni, Cu, Zn, Aℓ Cr and Ti, noble metals, such as Ag, Au and Pt, and alloys, such as brass. The method of coating the superfine wire may be an ordinary coating method, such as electroplating, hot dip coating, PVD, CVD or sputtering.

However, to provide the superfine wire with the aforesaid various functions in addition to corrosion resistance, Ni coating is preferable.

Table 3 shows the general classification of performance of coating metals to meet required characteristics of the superfine wire. In Table 3, a mark ◎ indicates "excellent", a mark O indicates "good", a mark Δ indicates "inferior" and a mark X indicates "ineffective".

As is obvious from Table 3, Ni is the most excellent metal in view of characteristics required by uses of the superfine wire of the present invention.

When the weight of the coating metal used for coating 1 kg of the superfine wire is less than 1g, the effect of coating, such as rust preventing effect, is insufficient. On the other hand, even if the weight of the coating metal for 1 kg of the superfine wire is increased beyond 100g, increase in the coating effect of the coating metal is limited, and excessively thick coating entails secondary problems, such as powdering, in processing the coated superfine wire. Therefore, excessively thick coating is undesirable.

Table 3

| | Coating metals | | | | | | | | | |
|---|---|---|---|---|---|---|---|---|---|---|
| Required characteristics | Ni | Cu | Zn | Cu-Zn | Aℓ | Au | Ag | Cr | Pt | Ti |
| Extension of die life | ◎ | O | Δ | O | Δ | O | O | X | ◎ | X |
| Rust prevention | ◎ | Δ | ◎ | Δ | O | O | O | O | ◎ | ◎ |
| Oxidation prevention | ◎ | Δ | O | Δ | Δ | O | O | O | ◎ | O |
| Adhesion to metals*1 | ◎ | Δ | X | X | O | Δ | Δ | X | O | X |
| Surface treatability | ◎ | Δ | X | X | Δ | Δ | Δ | Δ | O | X |

| | | | | | | | | | | |
|---|---|---|---|---|---|---|---|---|---|---|
| Corrosion resistance | ◎ | × | ◎ | △ | ○ | ○ | △ | ○ | ◎ | ◎ |
| Self-lubrication | ◎ | ○ | △ | ○ | △ | ○ | ○ | × | ◎ | △ |
| Decorativeness*2 | △ | △ | △ | ○ | ○ | ○ | ○ | ○ | ◎ | ◎ |
| Electric conductivity | × | ○ | × | △ | △ | ◎ | ◎ | × | ◎ | × |

*1: Adhesion to matrix metals, such as Aℓ, of FRMs

*2: Color and oxidation color development of coating metals

The performance of the superfine wire or Ni plated superfine wire of the present invention in practical application will be described hereinafter.

Wire Saw

An Ni film coating the superfine wire prevents the rusting of the superfine wire and efficiently introduces abrasive grains between the wire 2 and the work. Abrasive grains are easily introduced between the wire 2 and the work because abrasive grains cut into the Ni film coating the wire 2, which improves machining accuracy and enables increase in machining speed.

The Ni-plated superfine wire of 40 to 60 km in length extended on the wire saw so as to engage the work at tens of cutting positions, in some cases, hundreds of cutting positions, ensures the wire saw high reliability so that the wire saw is able to operate fully automatically and continuously night and day without being stopped by the breakage of the Ni-plated superfine wire.

High-pressure Hose

When applied to the reinforcing layers of a high-pressure hose, the life of the reinforcing layers formed of the superfine wire of the present invention is five times the life on the order of ten hours of reinforcing layers formed of a piano wire or longer. Furthermore, the superfine wire of the present invention is capable of forming reinforcing layers for a superhigh-pressure hose having a pressure capacity in the range of 8000 to 10,000 kgf/cm$^2$ and is capable of ensuring the superhigh-pressure hose safety, which is essential to such a superhigh-pressure hose.

Composite Materials and Nets

When used as reinforcement for reinforcing FRPs, FRMs and rubber products, the superfine wire of the present invention increases the strength thereof remarkably and enables forming FRPs, FRMs and rubber products in lightweight constructions. Furthermore, the superfine wire of the present invention forms lightweight wire nets, fabric and the like having a very high strength.

A superfine wire of the present invention for reinforcement has excellent workability for cold working. The superfine wire of 160 $\mu$m or below can easily and surely be obtained by drawing a wire having an appropriate diameter at a suitable reduction ratio. Strands and threads can easily be produced by bundling and twisting superfine wires, for example, of a diameter in the range of 10 to 100 $\mu$m, and woven fabric and wire nets of such strands and threads can easily be produced. Since the superfine wires extends longitudinally and transversely in woven fabric and wire nets, the use of such woven fabric and wire nets for forming composite materials reinforces the composite materials biaxially.

The superfine wire of 50 $\mu$m or below in diameter is more susceptible to corrosion than those having a greater diameter. Therefore, it is essential to plate such a superfine wire having a very small diameter with a corrosion-resistant metal, such as Ni. The plated superfine wire has a rigidity higher than that of the bare superfine wire and is easy to handle in forming strands and in weaving. Thus, in view of those two advantages of plating, it is very important to plate the superfine wire with a metal.

Furthermore, since the superfine wire has a very small diameter, the ductility of the superfine wire is higher than that of the conventional piano wire, and the ductility is further enhanced when a plurality of superfine wires are twisted in a strand. Accordingly, the strands of the superfine wires can be knitted on a net knitting machine to knit wire nets without causing cracks in the superfine wires or breaking the strand at the selvages of the wire nets where the strand is bent.

In reinforcing a matrix material with the superfine wires of the present invention, the superfine wires may be used in a reinforcing nets formed of strands of the superfine wires, a reinforcing nets formed of the superfine wires, a reinforcing woven fabric formed of parallel filament yarns formed by binding a plurality of parallel superfine wires by sizing, in an individual arrangement, and in a reinforcing woven fabric consisting of the superfine wires as warps or wefts, and conventional metallic, organic or inorganic very fine wires, such as piano wires, stainless steel wires, high-manganese steel wires, titanium wires, alamid wires, resin wires, carbon fibers, boron fibers or SiC whiskers as wefts or warps. The superfine wires of the present invention may be used in combination with other wires in mixed strands and mixed woven fabric. Such composite wire nets and composite woven fabric have the advantages of both the superfine wires of the present invention and other wires.

The superfine wire of the present invention is used also in concrete ropes and photosensors. Minute springs of 1 mm or below in diameter formed of the superfine wire of the present invention enables the microminiaturization of medical equipments and cassette tape recorders. Springs of the superfine wire has fatigue strength and durability far greater than those of conventional springs formed of a piano wire or a stainless steel wire. Very thin ropes of 1 mm or below in diameter formed of the superfine wires of the present invention for transmitting motions rapidly, accurately and at a high response speed to the movable components of measuring instruments, copying machines and printers, for which miniaturization, reduction in weight and increase in operating speed are urgent problems, to control the movable components are superior to the conventional very thin ropes formed of amorphous wires or stainless steel wires in characteristics, elongation, life and strength. The use of the very thin ropes formed of the superfine wires of the present invention improves the response characteristics and control accuracy of the equipments remarkably.

Since the superfine wire of the present invention has a tensile strength higher than the conventional very fine wires, the use of the superfine wire for the tire cords or reinforcing wires of pneumatic tiers for automobiles and aircraft reduces the quantity of the tire cords or the reinforcing fibers, which enables the pneumatic tires to be formed in a lightweight construction.

Generally, carbon fibers, carbon filaments, chemical fibers, such as alamid fibers, and metallic wires, such as piano wires, are used for reinforcing rubber composite materials and plastic composite materials. Cords formed of brass-plated piano wires and having excellent strength characteristics, in particular, are used widely as a reinforcement for rubber composite materials. Further reduction in the thickness and strength of reinforcing wires has been desired to further improve the strength characteristics of the reinforcement. Reinforcing wires must meet the following conditions to meet such requirements.

(1) Excellent workability
(2) Capability of enhancement of strength by working
(3) Excellent corrosion resistance
(4) Excellent adhesion to rubber
(5) Capability of forming a stable cord construction (The finer the wires, the higher the degree of fretting between the wires.)

The present invention provides an excellent reinforcing material meeting the conditions (1) to (5) formed by coating a wire cord with a resin.

Example 1

Chemical compositions of steels Nos. 1 to 10 forming wires are tabulated in Table 4. Superfine wires were obtained by drawing wires of steels Nos. 1, 2 and 5. The diameters, strengths and structures of these superfine wires are tabulated in Table 5.

When the superfine wires have a homogenous, unidirectional minute, composite fibrous structure of ferrite and martensite, the strength of the superfine wires is 300 kgf/mm$^2$ or above. The strength of superfine wires is less than 300 kgf/mm$^2$ even if the chemical composition of these superfine wires is the same as those of the former superfine wires, when the structure of the superfine wires is an incomplete fibrous structure.

Table 4

| Steel No. | Chemical components (percent by weight) | | | | | | | | | | |
|---|---|---|---|---|---|---|---|---|---|---|---|
| | C | Si | Mn | Cr | Mo | Ni | Cu | Nb | V | Aℓ | H |
| 1 | 0.08 | 0.5 | 1.5 | - | - | - | - | - | - | 0.004 | <0.0001 |
| 2 | 0.11 | 0.5 | 1.5 | - | - | - | - | - | - | 0.003 | <0.00005 |
| 3 | 0.11 | 0.5 | 1.5 | 0.7 | - | - | - | - | - | 0.003 | <0.0001 |
| 4 | 0.11 | 0.5 | 1.5 | 0.6 | 0.3 | - | - | - | - | 0.003 | <0.0001 |
| 5 | 0.16 | 0.9 | 1.0 | - | - | - | - | - | - | 0.003 | <0.00005 |
| 6 | 0.18 | 0.9 | 1.5 | - | - | - | - | 0.02 | 0.1 | 0.003 | <0.00005 |
| 7 | 0.15 | 0.9 | 1.5 | - | - | - | 0.1 | - | - | 0.002 | <0.0001 |
| 8 | 0.15 | 0.8 | 0.9 | - | 0.5 | 1.2 | - | - | - | 0.002 | <0.00005 |
| 9 | 0.21 | 0.8 | 1.6 | - | - | - | - | - | - | 0.002 | <0.0001 |
| 10 | 0.82 | 0.3 | 0.7 | - | - | - | - | - | - | 0.003 | - |

A process of manufacturing the aforesaid superfine wires of the present invention will be described hereinafter.

Wires of 1.5 mm (1500 µm) in diameter respectively of the steels Nos. 1, 2 and 5 shown in Table 4 were heated continuously at 890 °C and quenched, and then the wires were heated continuously at 810 °C and quenched to obtain wires of a composite structure consisting of ferrite and martensite containing residual austenite. The volume percentage of martensite in the wires of the steels Nos. 1, 2 and 5 is 26%, 48% and 59%, respectively. The structure of the martensite in the wire of the steel No. 1 was substantially acicular structure, while those in the wires of the steels Nos. 2 and 5 were combined acicular and globular structure.

The wire of 1.5 mm in diameter of the steel No. 5 was heat-treated under conditions different from those for obtaining the foregoing wires of the composite structure to obtain a wire as a control, which will be referred to as a wire of steel No. 5R. The volume percentage of martensite in the wire of the steel No. 5R was 79%, and the structure of the martensite was a combined acicular and globular structure containing 80% globular martensite.

The wires thus obtained were subjected to a cold drawing process to obtain superfine wires. The strength and structure of these superfine wires are shown in Fig. 12. As is obvious from Fig. 12, the strength of the superfine wires formed by cold drawing the wires of the steels 1, 2 and 5 at a reduction ratio of five or above is greater than 300 kgf/mm$^2$.

Fig. 9 is a photograph showing the structure of the superfine wire of 48 µm in diameter formed by drawing the wire of the steel No. 1 at a drawing strain ($\epsilon$ = 2 ln $d_0$/d) of 6.9 taken by a scanning electron microscope at a magnification of 3000, Fig. 10 is a photograph showing the structure of the same superfine wire taken by an electron microscope at a magnification of 10,000, and Fig. 11 is a transmission photograph showing the structure of the same superfine wire taken by an extrahigh-voltage transmission electron microscope (3 MV).

Table 5

| Steel No. | Superfine wires | | | |
|---|---|---|---|---|
| | Diam. (μm) | Strength ($kgf/mm^2$) | Structure | Remarks |
| 1 | 59 | 305 | A | Sample |
| 1 | 48 | 322 | A | Sample |
| 2 | 98 | 303 | A | Sample |
| 2 | 48 | 371 | A | Sample |
| 5 | 300 | 239 | B | Control |
| 5 | 167 | 282 | B | Control |
| 5 | 98 | 329 | A | Sample |
| 5 | 59 | 379 | A | Sample |
| 5 | 48 | 401 | A | Sample |
| 5 | 167 | 261 | B | Control |
| 5 | 98 | 277 | B | Control |

A: Fibrous microstructure of ferrite and martensite B: Incomplete fibrous microstructure of ferrite and martensite

Fig. 13 is a photograph showing the structure in a mixed acicular and globular low-temperature transformed phase of the superfine wire of 48 μm in diameter formed by drawing the wire of 1.5 mm in diameter of the steel No. 5 taken by an electron microscope at a magnification of 3000, and Fig. 14 is a photograph showing the structure of the same superfine wire taken by an electron microscope at a magnification of 10,000. Fig. 15 is a photograph showing the structure of a superfine wire of 260 μm in diameter, as a control, formed by drawing a wire of 5.5 mm in diameter of the steel No. 5 having a mixed acicular and globular low-temperature transformed phase at a reduction ratio of 6.1 taken by an electron microscope at a magnification of 3000.

As is obvious from Figs. 9, 10, 13 and 14, all the superfine wire of the present invention have a homogenous, unidirectional, minute fibrous structure. An incomplete fibrous structure is formed as shown in Fig. 15, and the strength of the superfine wire is lower than 300 $kgf/mm^2$ when the diameter of the wire is outside the range specified by the present invention.

A wire of the steel No. 1 was heated continuously at 810 °C and quenched to obtain a wire of 0.8 mm in diameter having a two-phase structure of ferrite of 28% in volume percentage and globular martensite. The wire was drawn at a reduction ratio of 6.9 to obtain a superfine wire of 25 μm in diameter. Fig. 16 is a photograph showing the structure of this superfine wire taken by an electron microscope at a magnification of 3000. For comparison, a wire of 2.5 mm in diameter of the steel No. 1 obtained through the same process was drawn at a reduction ratio of 6.5 to obtain a superfine wire of 98 μm as a control. As is obvious from the photograph of Fig. 17 showing the structure of this superfine wire taken by a scanning electron microscope at a magnification of 3000, this superfine wire has an incomplete fibrous structure.

A wire of 2.5 mm in diameter of the steel No. 5 was heated continuously at 900 °C and 810 °C and quenched to obtain a wire having a two-phase composite structure of ferrite and martensite of 53% in volume percentage as a control. This wire was broken easily by wire drawing. It is clearly seen from Fig. 18 that a fibrous structure developed scarcely in the wire.

As shown in Fig. 12, the maximum strength of a thin wire formed by drawing the steel No. 5R is 280 $kgf/mm^2$ at the highest. The superfine wire of 98 μm in diameter obtained by drawing the steel No. 5R at a drawing strain of 5.2 had an incomplete fibrous structure.

Wires having a composite structure of ferrite and a low-temperature transformed phase were obtained by subjecting wires of 0.9 to 2.5 mm in diameter of the steels Nos. 1 to 9 (Table 4) to a heat treatment, and then the wires were subjected to a wire drawing process to obtain superfine wires. The respective strengths and structures of these superfine wires are shown in Table 6. Also shown as control in Table 6 is the diameter and strength of a superfine wire formed by subjecting a higher-carbon piano wire of the steel No. 10 to four cycles of lead patenting and drawing.

As is obvious from Table 6, the strengths of the superfine wires of the present invention are higher than 300 $kgf/mm^2$, which are far higher than that of the control formed by drawing the higher-carbon piano wire of the steel No. 10. The strengths of the superfine wires of the present invention are higher than amorphous wires produced by an underwater spinning process, having a strength ranging from 330 to 370 $kgf/mm^2$. No

manufacturing process for producing such superfine wires by wire drawing has been known.

Table 6

| Steel No. | Wire Dia.(mm) | Superfine wire | | Structure | Fiber interval (A) | Cell size (A) |
|---|---|---|---|---|---|---|
| | | Dia.(μm) | Strength (kgf/mm$^2$) | | | |
| 1 | 1.5 | 45 | 330 | $A_1$ | 650 | 80 |
| 2 | 1.5 | 49 | 374 | $A_1$ | 350 | 50 |
| 3 | 2.5 | 109 | 363 | $A_1$ | 400 | 50 |
| 4 | 2.5 | 129 | 351 | $A_1$ | 350 | 60 |
| 5 | 1.5 | 48 | 399 | $A_1$ | 300 | 50 |
| 6 | 1.5 | 69 | 368 | $A_1$ | 350 | 50 |
| 6 | 2.5 | 29 | 465 | $A_1$ | 120 | 30 |
| 7 | 1.5 | 30 | 342 | $A_1$ | 200 | 90 |
| 7 | 2.5 | 28 | 441 | $A_1$ | 150 | 30 |
| 8 | 0.9 | 18 | 417 | $A_2$ | 160 | 40 |
| 9 | 2.2 | 20 | 538 | $A_1$ | 90 | 20 |
| 10 | - | 101 | 318 | B | - | - |

$A_1$: Structure of the present invention formed by quenching using a soluble coolant
$A_2$: Structure of the present invention formed by air cooling
B: Pearlite formed by repeating lead patenting and drawing

Example 2

Wires A of 2.5 mm in diameter of the steel No. 5 (Table 4) were subjected to a primary cold drawing process to form wires of 0.4 mm in diameter, the wires of 0.4 mm in diameter were Ni-plated by electroplating, and then the Ni-plated wires were subjected to different secondary cold drawing processes to form superfine wires 2 of 0.1 mm in diameter and superfine wires 3 of 0.05 mm in diameter. Some of the wires of 0.4 mm in diameter formed by the primary cold drawing process were subjected directly to a secondary cold drawing process to form a superfine wires 1 of 0.05 mm in diameter as controls.

The die life tests were carried out by using the superfine wires 1, 2 and 3, and diamond dies. The results of the die life tests are shown in Table 7. The dies were lubricated by a soluble die lubricant for drawing the Ni-plated wires and by an oil lubricant for drawing the uncoated wires. Die life is represented by the quantity of superfine wires drawn before the dies were abraded by 0.002 mm in diameter.

As is obvious from Table 7, Ni-plating extends the life of dies effectively. Since the Ni film was very small, there was no significant difference in strength between the superfine wires 1 and 3.

A wire of 4.5 mm in diameter of the steel No. 5 (Table 4) was heated continuously at 900 °C, quenched, heated continuously at 810 °C, and quenched to obtain a wire of a composite structure of ferrite and a mixed acicular and globular martensite containing residual austenite, in which the volume percentage of the martensite was 58%.

This wire was subjected to a primary cold drawing process, the wire obtained by the primary cold drawing process was Ni-plated to coat the wire of 1 kg in weight by Ni of 13g in weight by electroplating, and then the Ni-plated wire was subjected to a secondary cold drawing process to obtain a fine wire of 0.3 mm in diameter.

Table 7

| Superfine wire | 1 | 2 | 3 |
|---|---|---|---|
| Diam. (mm) | 0.05 | 0.10 | 0.05 |
| Strength ($kgf/mm^2$) | 403 | 357 | 399 |
| Quantity of Ni film (g/kg) | 0 | 8 | 17 |
| Diam. after primary drawing (mm) | 0.40 | 0.40 | 0.40 |
| Secondary reduction ratio (%) | 99 | 94 | 99 |
| Die life (weight of wire drawn) (kg) | 0.7 | 12 | 7 |
| Remarks | Control | Sample | Sample |

The 0.3 mm diameter wire thus obtained was held in a high-temperature and high-humidity environment of 80 ° C in temperature and 80% in humidity for a rusting test. A piano wire of 0.3 mm in diameter and a Cu-Zn-plated piano wire of 0.3 mm in diameter were subjected to the same rusting test for comparison. As is obvious from Fig. 19, the Ni-plated superfine wire of the present invention has a rust resistance substantially the same as a SUS304 grade (JIS) stainless steel wire.

The superfine wire 3 of the present invention and the superfine wire 1 as a control (Table 7) were heated at 550 ° C in air to observe the surface oxidation of the wires.

The surface oxidation of the superfine wire 1 started at 150 ° C, and the adhesion of the superfine wire 1 to a resin was inferior. The surface oxidation of the Ni-plated superfine wire 3 started at 550 ° C, and the adhesion of the superfine wire 3 to a resin was excellent. Thus, Ni-plating in accordance to the present invention increases surface oxidation starting temperature. Accordingly, the superfine wires of the present invention exerted excellent adhesion to an epoxy resin in insert molding the superfine wires in the epoxy resin at 200 ° C.

The superfine wires of the present invention and ropes consisting of the superfine wires of the present invention can easily be coated with resins, such as polyamide resins, polyester resins and polytetrafluoroethylene resins, have excellent adhesion to resins and excellent corrosion resistance.

Example 3

Wires A of 2.5 mm in diameter of the steel No. 5 were subjected to primary cold drawing processes to obtain wires of 0.3 mm in diameter and those of 0.4 mm in diameter, the 0.3 mm diameter wire and the 0.4 mm diameter wire were Ni-plated by electroplating to plate the wires with Ni of quantities shown in Table 8, and then the Ni-plated wires were subjected to secondary cold drawing processes at different reduction ratios to obtain wires of diameters in the range of 0.06 to 0.30 mm. The superfine wires obtained by the secondary drawing processes were subjected to salt water spray tests (JIS). The results of the salt water spray tests are shown in Table 8. The corrosion resistance of the Ni-plated superfine wires of the present invention is substantially the same as that of wires of SUS316 (JIS) and is higher than wires of SUS304.

Table 8

| Superfine wire | 1 | 2 | 3 | 4 | 5 | 6 |
|---|---|---|---|---|---|---|
| Diameter (mm) | 0.30 | 0.25 | 0.10 | 0.06 | 0.10 | 0.10 |
| Diam. after primary | 0.30 | 0.30 | 0.30 | 0.40 | - | - |
| drawing (mm) | | | | | | |
| Secondary reduction | 0 | 31 | 89 | 98 | - | - |
| ratio (%) | | | | | | |
| Quantity of Ni film (g/kg) | 28 | 28 | 28 | 45 | - | - |
| Rust resistance (Number of salt water spray test cycles before rusting (JIS) | 1 | >10 | >10 | >10 | 2 | >10 |
| Remark: Superfine wires 1 to 4 are those of the present invention, the superfine wire 5 and 6 are controls formed respectively of SUS304 and SUS316 wires (JIS) | | | | | | |

The superfine wires as Ni-plated have defects, such as pinholes, and hence are subject to local corrosion. On the other hand, the Ni-plated superfine wires of the present invention are satisfactorily coated with a Ni film, because the secondary cold drawing process subsequent to the Ni-plating process causes the Ni film to coat the surface of the superfine wires firmly.

Generally, the soundness, hence, the corrosion resistance, of a metal film coating a wire is enhanced by repetitive die drawing.

Fig. 20 is a graph showing the results of salt water spray tests of a wire as Ni-plated in terms of the variation of the corrosion resistance of the wire as Ni-plated with the thickness of the Ni film. From Fig. 20, a minimum thickness of the Ni film effective for corrosion resistance is on the order of 8 $\mu$m.

Generally, when the thickness of a metal coating a superfine wire of a diameter less than 100 $\mu$m is greater than 8 $\mu$m, the volume percentage of the coating metal is excessively high, which reduces the strength of the superfine wire greatly. In accordance with the present invention, the soundness of the metal film is enhanced by subjecting a plated wire to a secondary cold drawing process, and hence even if the thickness of the coating film is very thin, the metal-plated superfine wire is highly corrosion-resistant and has a high strength.

## Example 4

Tire cords of types A and B as shown in Fig. 21 were manufactured by using superfine wires of the present invention having characteristics shown in Tables 9 and 10.

The tire cords of types A and B have superfine wires B1 and A1 (Table 10) as the center wires g and h, and superfine wires B1 and A2 (Table 10) as the peripheral wires a, b, c, d, e and f, respectively. The tire cords of types A and B are coated with a polyester resin Y. The component superfine wires are coated respectively with Ni films X to provide the superfine wires with corrosion resistance and to facilitate twisting the superfine wires. The characteristics of the tire cords of types A and B are tabulated in table 11. As is obvious from Table 11, the superfine wires of the present invention coated with a resin have strength higher than that of bare superfine wires.

Incidentally, the results of comparison in corrosion resistance between the tire cords composed of the superfine wires of the present invention and those composed of the conventional superfine wires are shown in Table 12 and Fig. 22. As is obvious from Table 12 and Fig. 22, the corrosion resistance of the tire cords composed of the superfine wires of the present invention is far higher than that of the tire cords composed of the conventional superfine wires.

Table 9

| Superfine wire | Composition (percent by weight) | | | | | | |
|---|---|---|---|---|---|---|---|
| | C | Si | Mn | Aℓ | P | S | N |
| A | 0.16 | 0.89 | 1.55 | 0.002 | ≦0.002 | ≦0.002 | ≦0.002 |
| B | 0.17 | 0.91 | 1.51 | 0.001 | ≦0.002 | ≦0.002 | ≦0.002 |

Table 10

| Superfine wire | Diameter (mm) | Breaking load (kgf) | Tensile strength ($kgf/mm^2$) | Remarks |
|---|---|---|---|---|
| A1 | 0.050 | 0.774 | 394 | Ni plated |
| A2 | 0.047 | 0.699 | 403 | |
| B1 | 0.028 | 0.287 | 467 | |

Table 11

| Tire cord | Superfine wire | Twist pitch (mm) | Resin coating | Breaking load (kgf) | Strength retention (%) | Structure |
|---|---|---|---|---|---|---|
| 1 | A1(center) | 3.00 | None | 4.773 | 96.1 | 1 + 6 |
| 2*1 | A2(others) | | Polyester | 4.853 | 97.7 | 1 + 6 |
| 3 | B1(all) | 0.88 | None | 1.832 | 91.2 | 1 + 6 |
| 4*2 | | | Polyester | 1.923 | 95.7 | 1 + 6 |

*1: tire cord of type B (Fig. 21)

*2: tire cord of type A (Fig. 21)

Table 12

| Code | Material | Diameter (µm) | Structure | Coating |
|---|---|---|---|---|
| (a) | Piano wire | 250 | 1 + 6 | Cu-Zn |
| (b) | SUS304 wire | 50 | 1 + 6 | - |
| (c) | Superfine wire of the invention (No. 1 in Table 11) | 50 | 1 + 6 | Ni |
| (d) | Superfine wire of the invention (No. 2 in Table 11) | 50 | 1 + 6 | Ni + polyester |

## Claims

**1.** Superhigh-strength superfine wire of 160 µm (diameter) or below and of a strength of 300 $kgf/mm^2$ or above, having a composite phase of ferrite and a low-temperature transformed phase of martensite, bainite or a mixture of martensite and bainite, composed of 0.01 to 0.50 weight-% of C, 1.5 weight-% or less of Si, 5.0 weight-% or less of Mn, and containing optionally
one of Nb, V and Ti in an amount of ≧ 0,005 to 0,5%
and/or 18% or below of Cr
and/or 2,0% or below of Cu
and/or 2,0% or below of Mo
and/or 8% or below of Ni
and/or 0,1% or below of Al
and/or 0,o2% or below of B
and/or trace amounts of Ca
and/or trace amounts of Ce,
the balance being iron, and inevitable impurities,
and having a fibrous microstructure consisting of fibers in unidirectional arrangement of microcells with sizes (width) in the range of 0,5 to 10 nm formed by hard drawing at a reduction ratio of ≧ 99 %, the fibers being arranged at intervals in the range of 5 to 100 nm.

2. Wire according to claim 1 wherein the content of hydrogen is ≦ 0.0001 %.

3. Wire according to claims 1 or 2 wherein the surface of this superhigh-strength superfine wire is coated with a metal, the quantity of the metal being in the range of 1 to 100 g per 1 kg of the superhigh-strength superfine wire.

4. Reinforcing wire formed by coating the superhigh-strength superfine wire of claim 3 with a resin.

5. Reinforcing material formed by twisting, bundling or weaving a plurality of superhigh-strength superfine wires of claim 3.

6. Composite material formed by coating the reinforcing material of claim 5 with a resin, rubber or a metal.

**Patentansprüche**

1. Hochfester ultrafeiner Draht mit einem Durchmesser von 160 µm oder darunter und einer Zugfestigkeit von 300 kg/mm$^2$ oder darüber, welcher eine zusammengesetzte Phase aus Ferrit und eine Niedrigtemperatur-Transformationsphase aus Martensit, Bainit oder einer Mischung von Martensit und Bainit enthält, bestehend aus 0,01 bis 0,50 Gew.-% C, 1,5 Gew.-% oder weniger Si, 5,0 Gew.-% oder weniger Mn, wobei zusätzlich die folgenden Bestandteile enthalten sein können
   - eines der Elemente Nb, V und Ti in einer Menge von ≧ 0,005 bis 0,5 %,
   - und/oder 18 % oder weniger Cr
   - und/oder 2 % oder weniger Cu
   - und/oder 2,0 % oder weniger Mo
   - und/oder 8 % oder weniger Ni
   - und/oder 0,1 % oder weniger Al
   - und/oder 0,02 % oder weniger B
   - und/oder Spurenmengen von Ca
   - und/oder Spurenmengen von Ce,

   während der Rest Eisen und unvermeidbare Verunreinigungen sind,
   und wobei dieser Draht eine faserförmige Mikrostruktur aufweist, bestehend aus Fasern in gleichgerichteter Anordnung von Mikrozellen mit Größen (Dicken) im Bereich von 0,5 bis 10 nm, gebildet durch Hartziehen bei einem Reduktionsverhältnis von ≧ 99 %, wobei die Fasern in Abständen im Bereich zwischen 5 und 100 nm angeordnet sind.

2. Ultrafeiner Draht nach Anspruch 1, dadurch **gekennzeichnet**, daß der Wasserstoffgehalt ≦ 0,0001 % ist.

3. Ultrafeiner Draht nach Anspruch 1 oder 2, dadurch **gekennzeichnet**, daß seine Oberfläche mit einer Metallbeschichtung versehen ist, deren Dicke in der Größenordnung von 1 bis 100 g pro kg des ultrafeinen Drahtes liegt.

**4.** Verstärkungsdraht, dadurch **gekennzeichnet**, daß der hochfeste ultrafeine Draht gemäß Anspruch 3 mit einem Harz beschichtet ist.

**5.** Verstärkungsmaterial, dadurch **gekennzeichnet**, daß dasselbe durch Verdrehen, Bündeln oder Verweben einer Mehrzahl von hochfesten ultrafeinen Drähten gemäß Anspruch 3 hergestellt ist.

**6.** Zusammengesetztes Material, dadurch **gekennzeichnet**, daß dasselbe durch Beschichtung des Verstärkungsmaterials gemäß Anspruch 5 mit einem Harz, Gummi oder einem Metall hergestellt ist.

## Revendications

**1.** Fil super fin à très haute résistance de 160 µm (diamètre) ou moins et d'une résistance de 300 kgf/mm$^2$ ou plus, possédant une phase composite de ferrite et d'une phase transformée à basse température de martensite, de bénite ou d'un mélange de martensite et de bénite, composé de 0,01 à 0,50 % en poids de C, 1,5 % en poids ou moins de Si, 5,0 % en poids ou moins de Mn et contenant en option :
un parmi le Nb, V et Ti dans une quantité de plus de 0,005 à 0,5 %;
et/ou 18 % ou moins de Cr;
et/ou 2,0 % ou moins de Cu;
et/ou 2,0 % ou moins de Mo;
et/ou 8 % ou moins de Ni;
et/ou 0,1 % ou moins d'Al;
et/ou 0,02 % ou moins de B;
et/ou des traces de Ca;
et/ou des traces de Ce;
le reste étant du fer et des impuretés inévitables, et possédant une microstructure fibreuse comprenant des fibres unidirectionnelles de micro-cellules avec des tailles (largeur) de l'ordre de 0,5 à 10 nm formées par fort étirage avec un rapport de réduction ≧ 99 %, les fibres étant placées selon des intervalles compris entre 5 et 100 nm.

**2.** Fil selon la revendication 1, dans lequel la proportion d'hydrogène est ≦ 0,0001 %.

**3.** Fil selon la revendication 1 ou 2, dans lequel la surface de ce fil super fin à très haute résistance est revêtue d'un métal, la quantité de métal étant comprise entre 1 et 100 g pour 1 kg de fil super fin à très haute résistance.

**4.** Fil de renforcement formé par revêtement d'une résine sur le fil super fin à très haute résistance selon la revendication 3 .

**5.** Matériau de renforcement formé par torsadage, par groupage ou par tissage d'une pluralité de fils super fins à très haute résistance selon la revendication 3.

**6.** Matériau composite formé par revêtement du matériau de renforcement selon la revendication 5 d'une résine, de caoutchouc ou d'un métal.

FIGURE 1

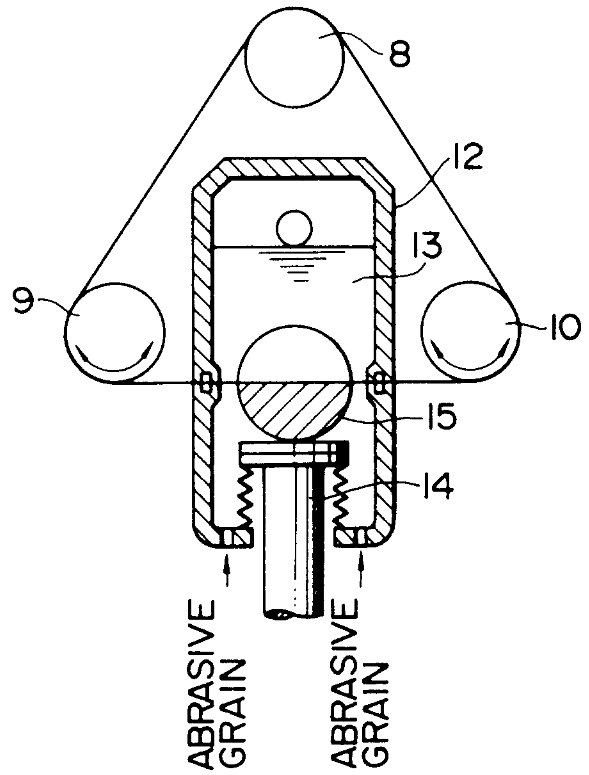


FIGURE 2

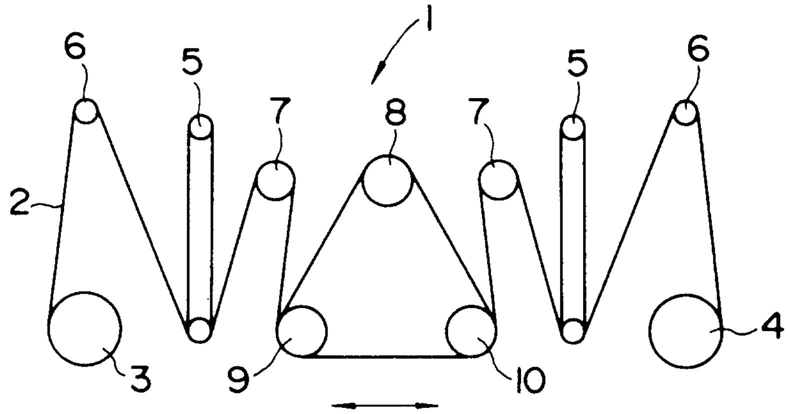

FIGURE 3

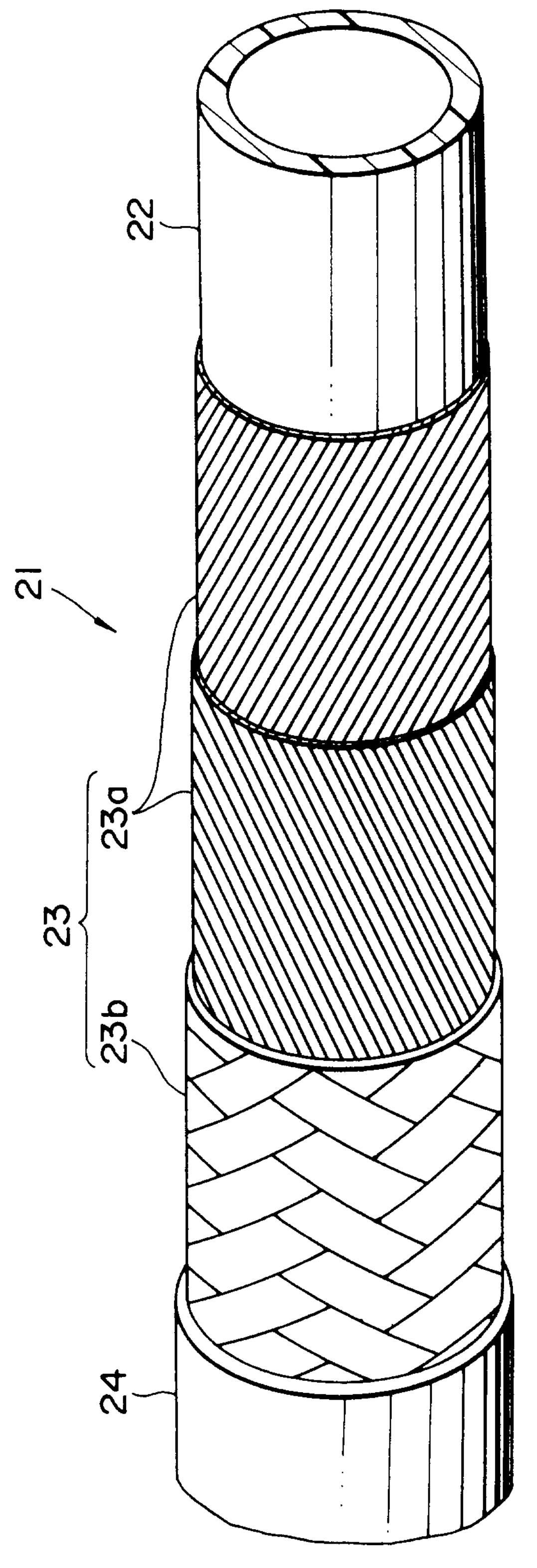

FIGURE 4

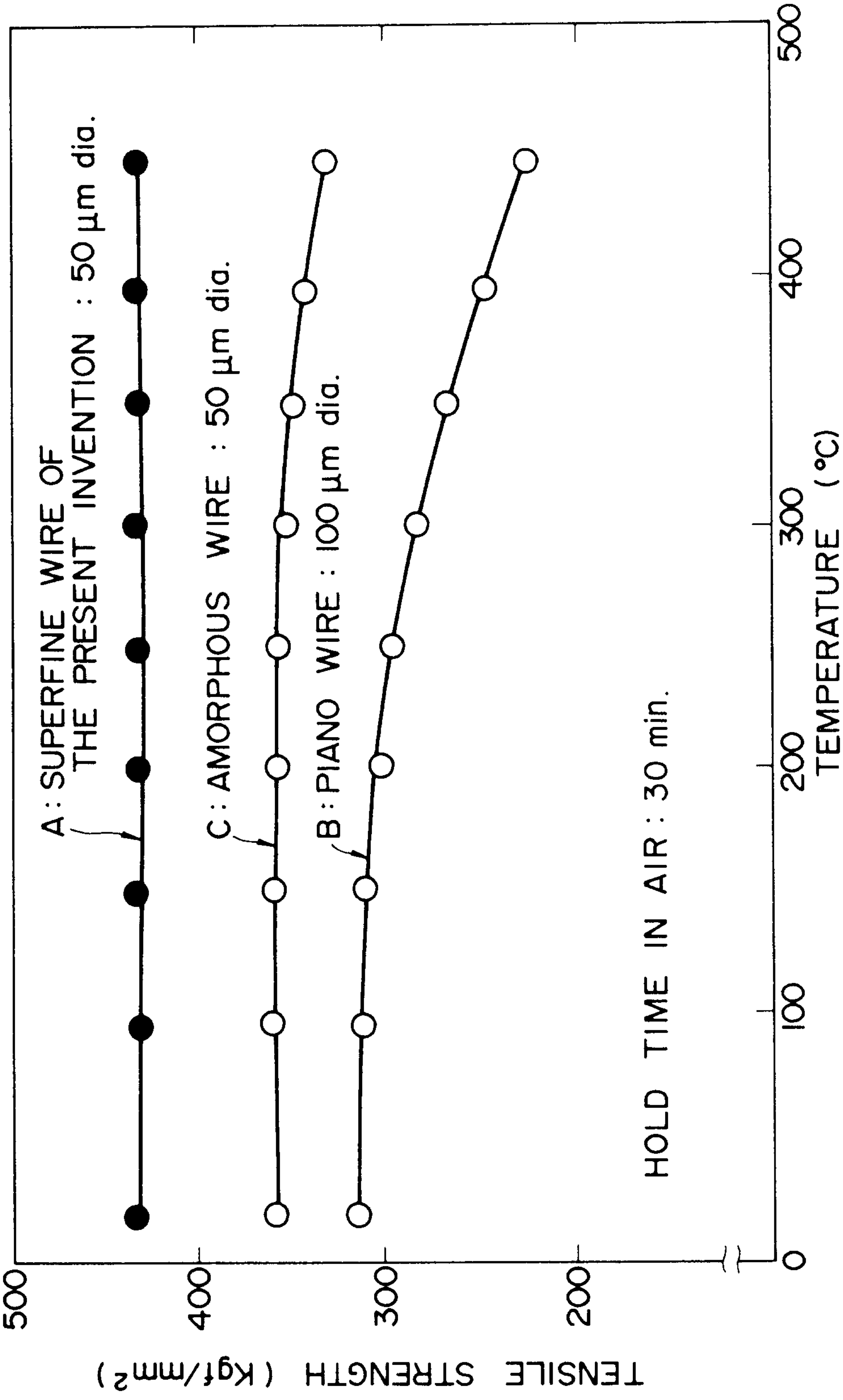
A : SUPERFINE WIRE OF THE PRESENT INVENTION : 50 µm dia.
C : AMORPHOUS WIRE : 50 µm dia.
B : PIANO WIRE : 100 µm dia.
HOLD TIME IN AIR : 30 min.
TENSILE STRENGTH ( Kgf/mm²)
TEMPERATURE (°C)
500
400
300
200
0
100
200
300
400
500

FIGURE 5

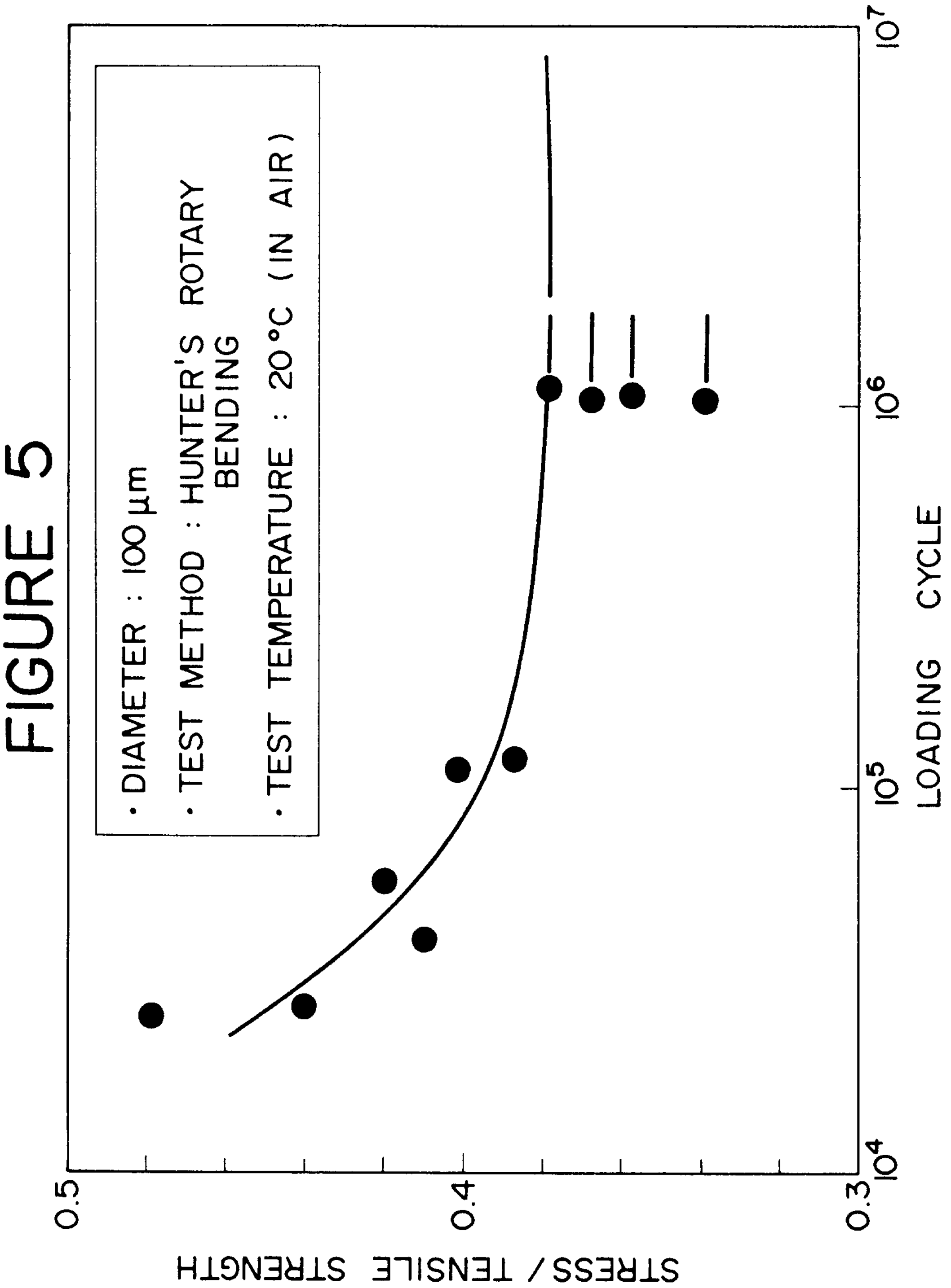

· DIAMETER : 100 μm
· TEST METHOD : HUNTER'S ROTARY BENDING
· TEST TEMPERATURE : 20°C (IN AIR)
0.5
0.4
0.3
STRESS / TENSILE STRENGTH
$10^4$
$10^5$
$10^6$
$10^7$
LOADING CYCLE

FIGURE 6

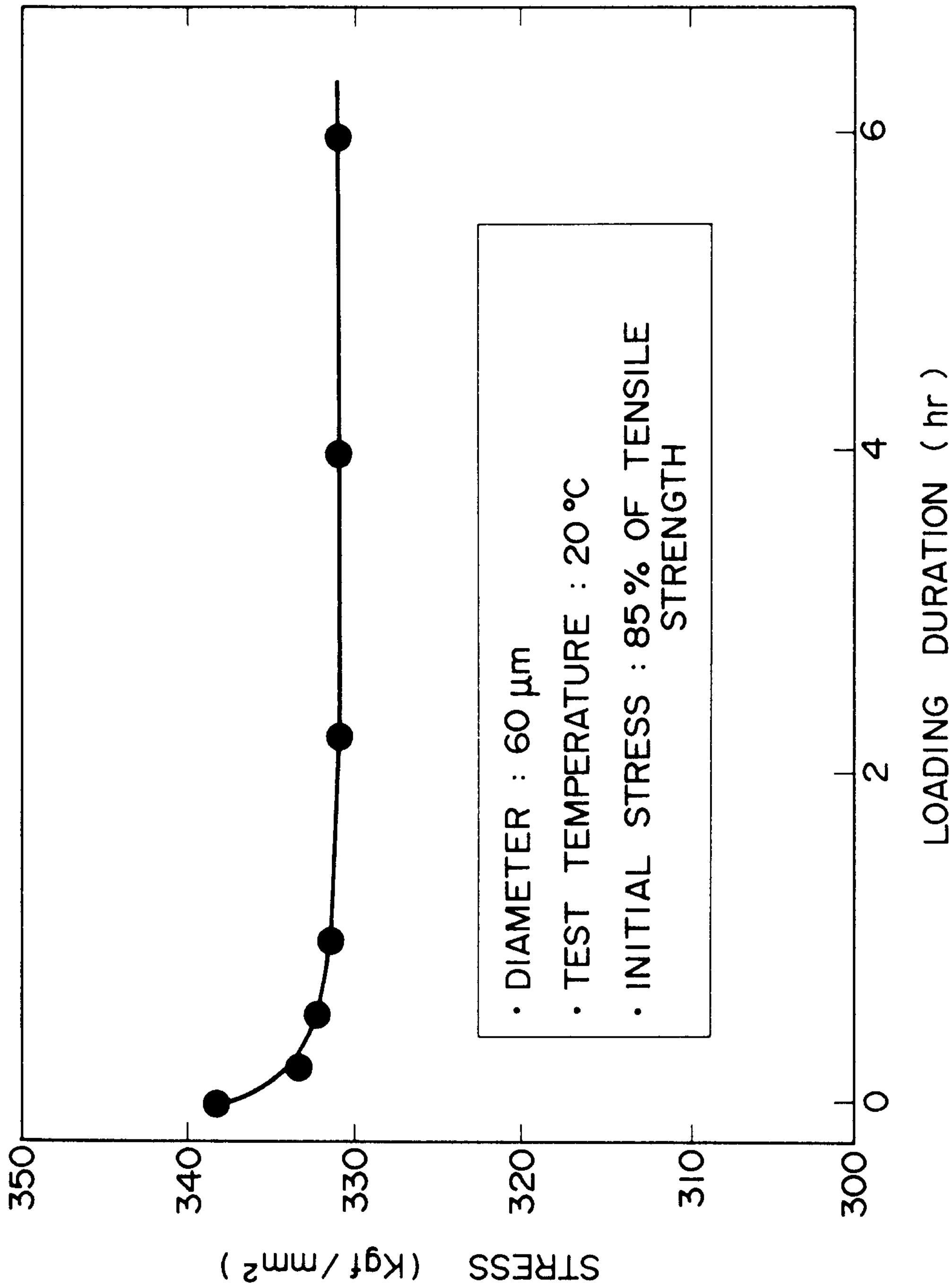

STRESS (Kgf / mm²)
350
340
330
320
310
300
0
2
4
6
LOADING DURATION ( hr )
· DIAMETER : 60 µm
· TEST TEMPERATURE : 20 °C
· INITIAL STRESS : 85 % OF TENSILE STRENGTH

FIGURE 7

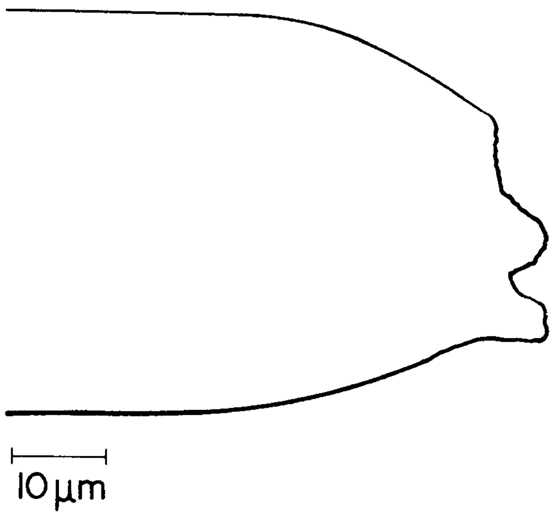


FIGURE 8

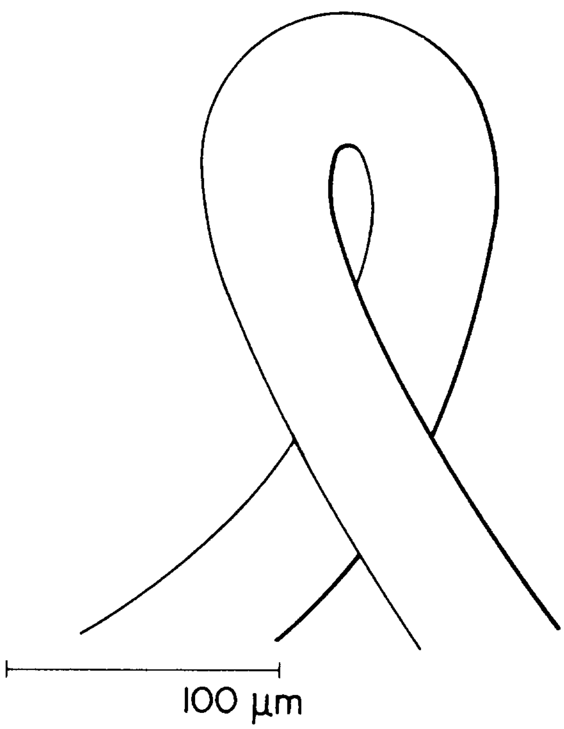

FIGURE 9

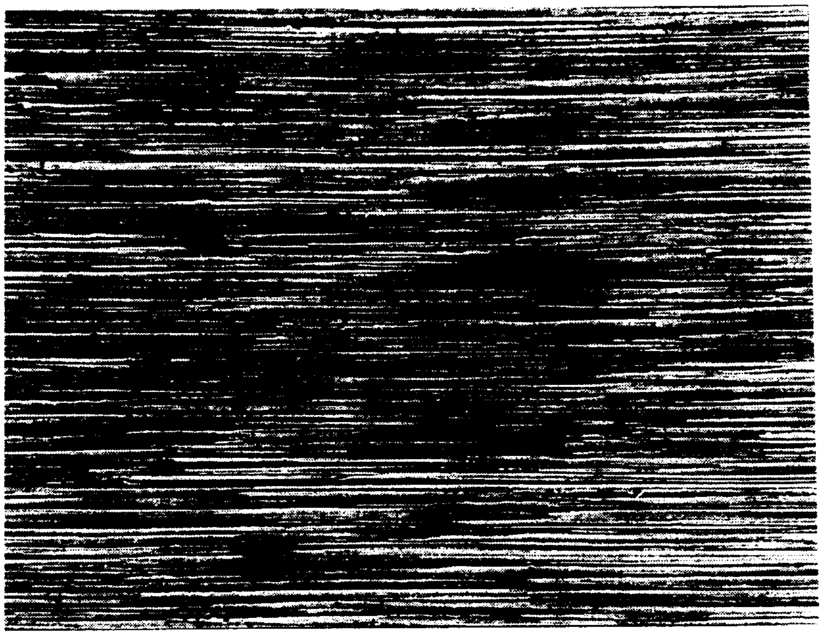

FIGURE 10

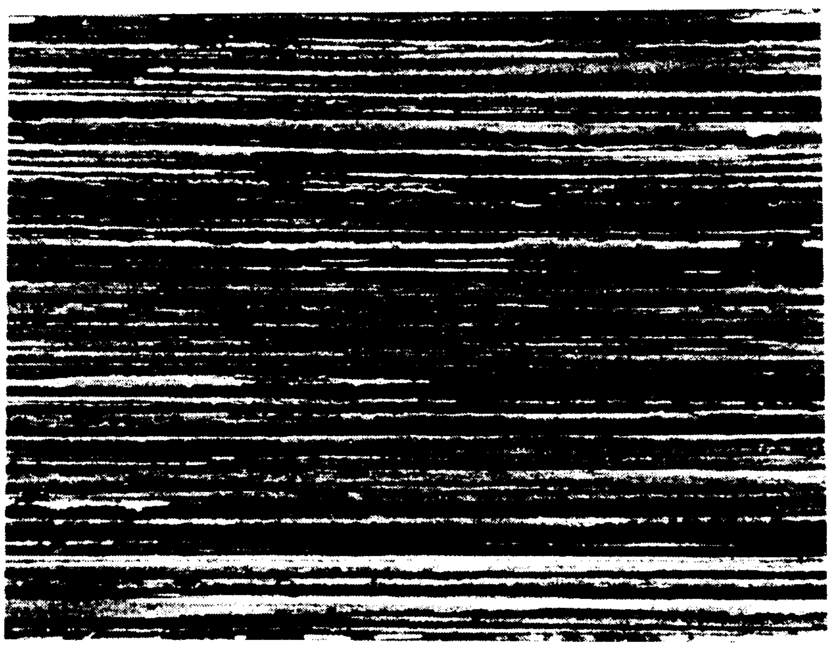

FIGURE 11

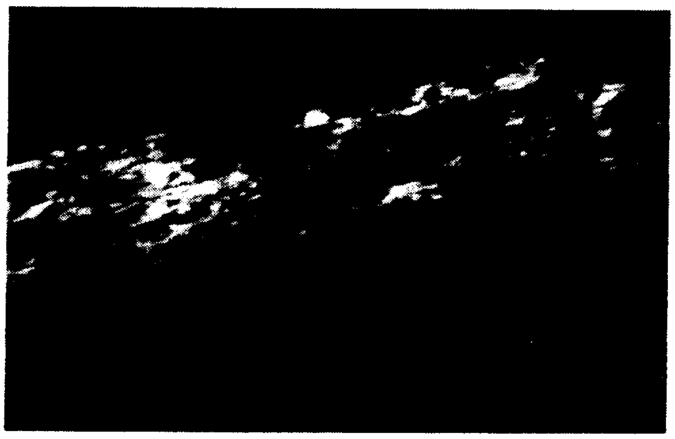

FIGURE 12

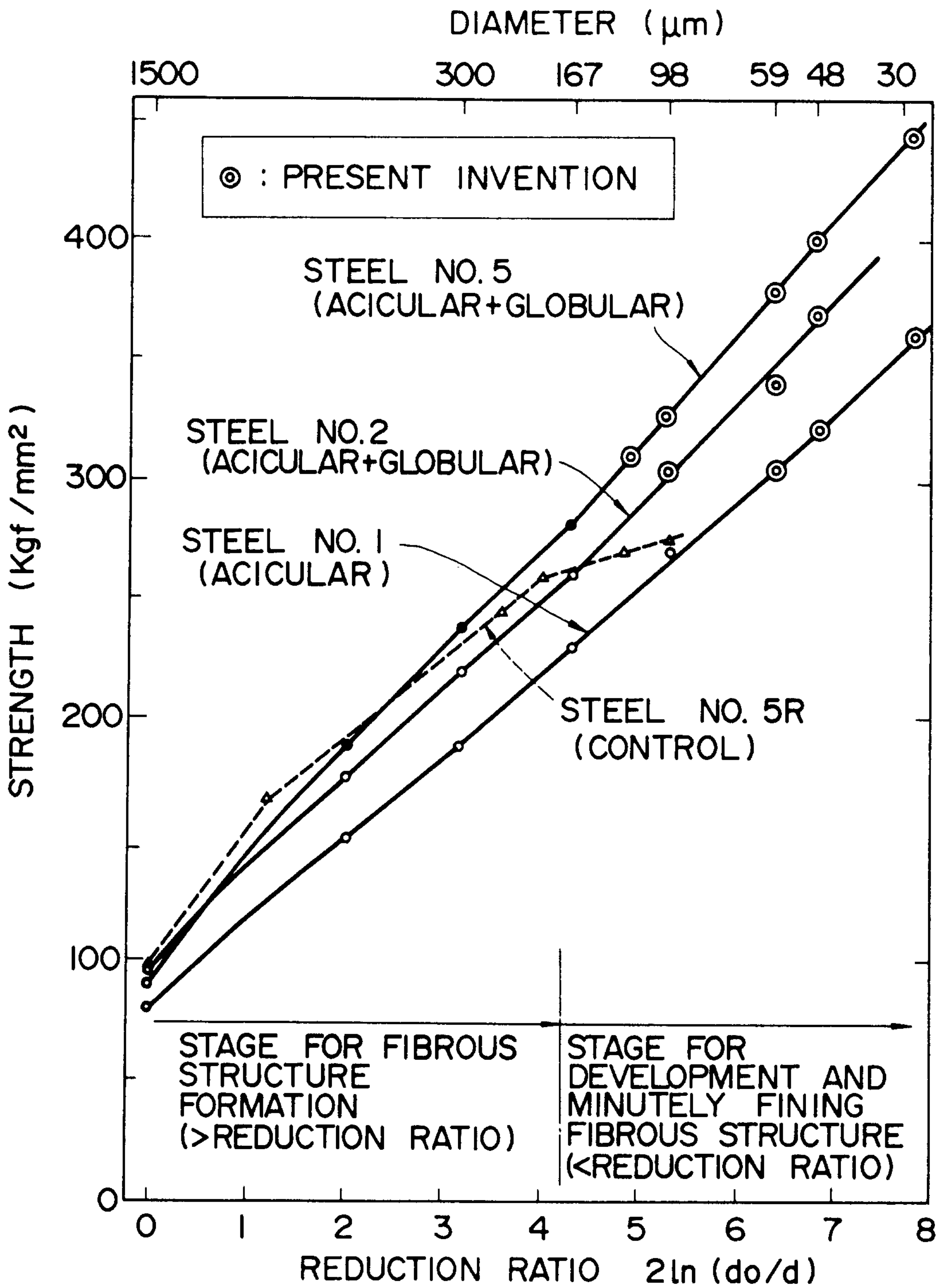
DIAMETER (μm)
1500
300
167
98
59
48
30
◎ : PRESENT INVENTION
STEEL NO. 5
(ACICULAR+GLOBULAR)
STEEL NO. 2
(ACICULAR+GLOBULAR)
STEEL NO. 1
(ACICULAR)
STEEL NO. 5R
(CONTROL)
STRENGTH (Kgf/mm²)
400
300
200
100
0
STAGE FOR FIBROUS STRUCTURE FORMATION (>REDUCTION RATIO)
STAGE FOR DEVELOPMENT AND MINUTELY FINING FIBROUS STRUCTURE (<REDUCTION RATIO)
0
1
2
3
4
5
6
7
8
REDUCTION RATIO 2ln (do/d)

FIGURE 13

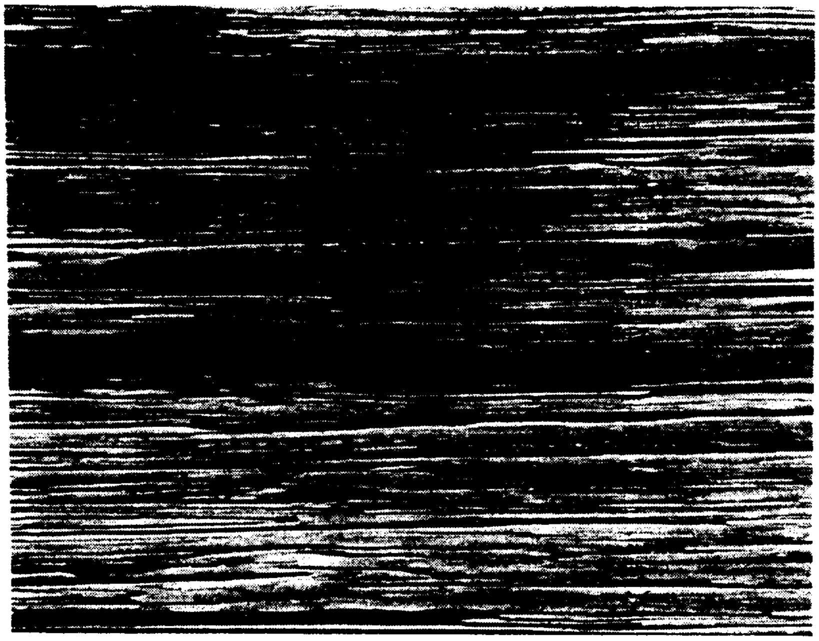

FIGURE 14

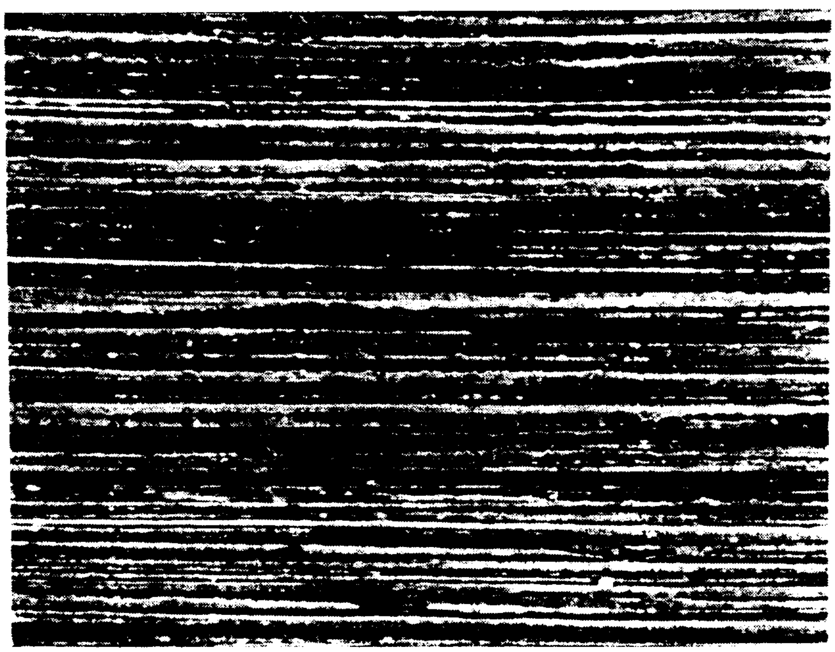

FIGURE 15

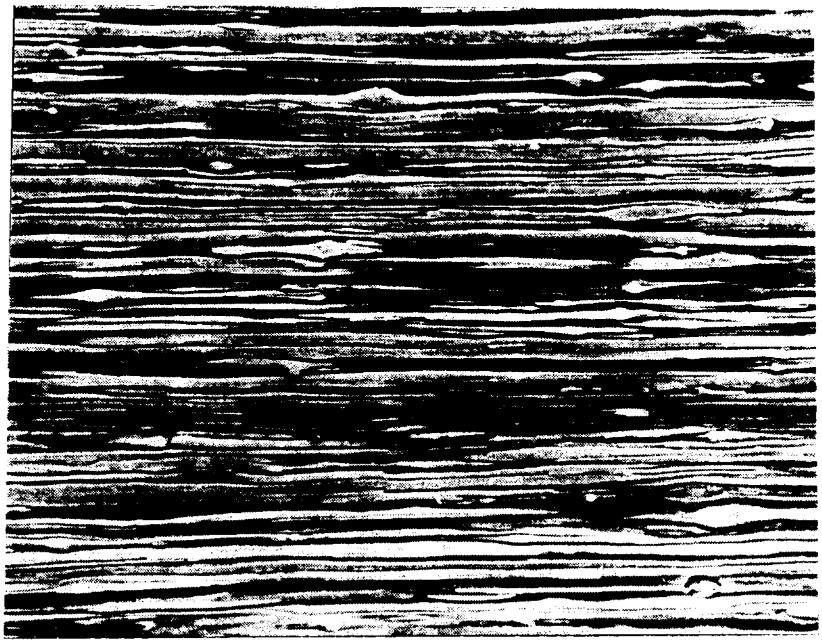

FIGURE 16

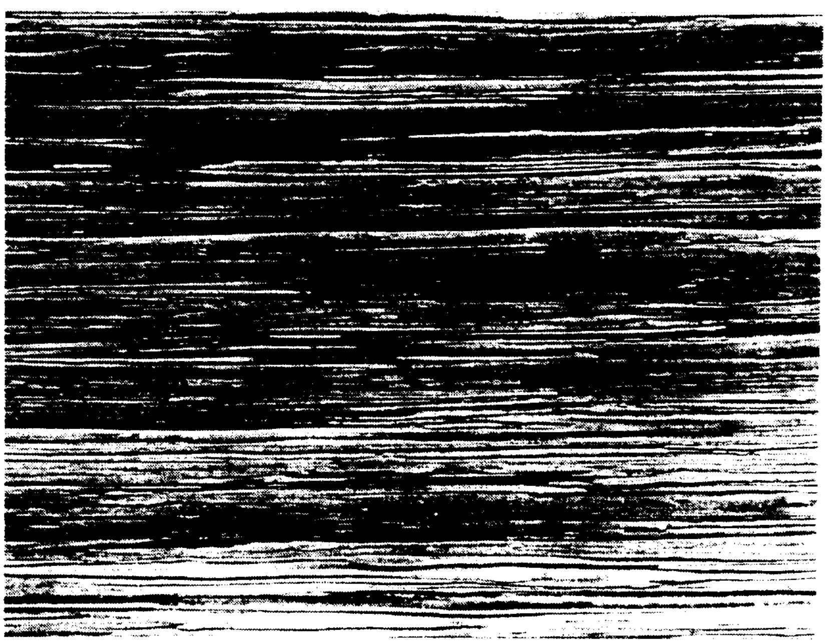

FIGURE 17

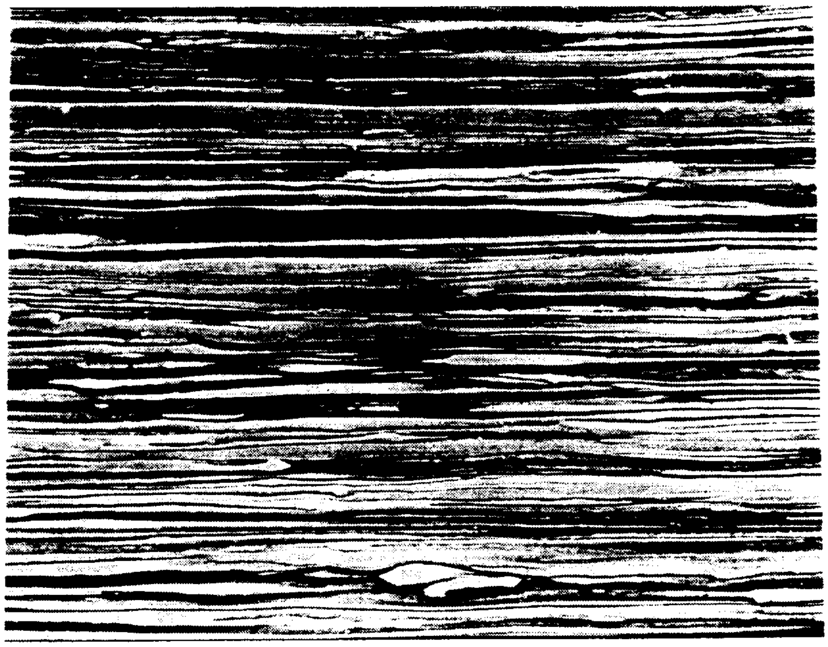

FIGURE 18

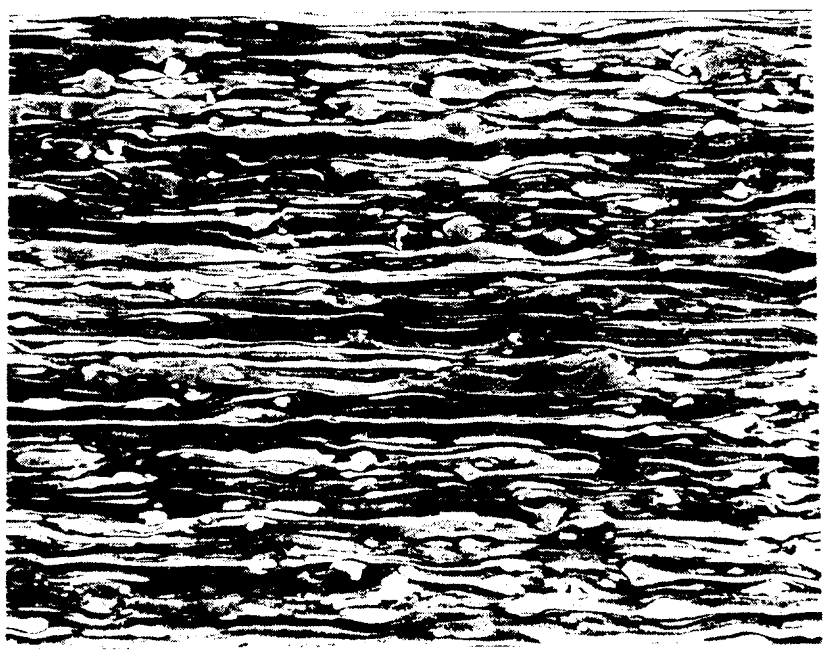

FIGURE 19

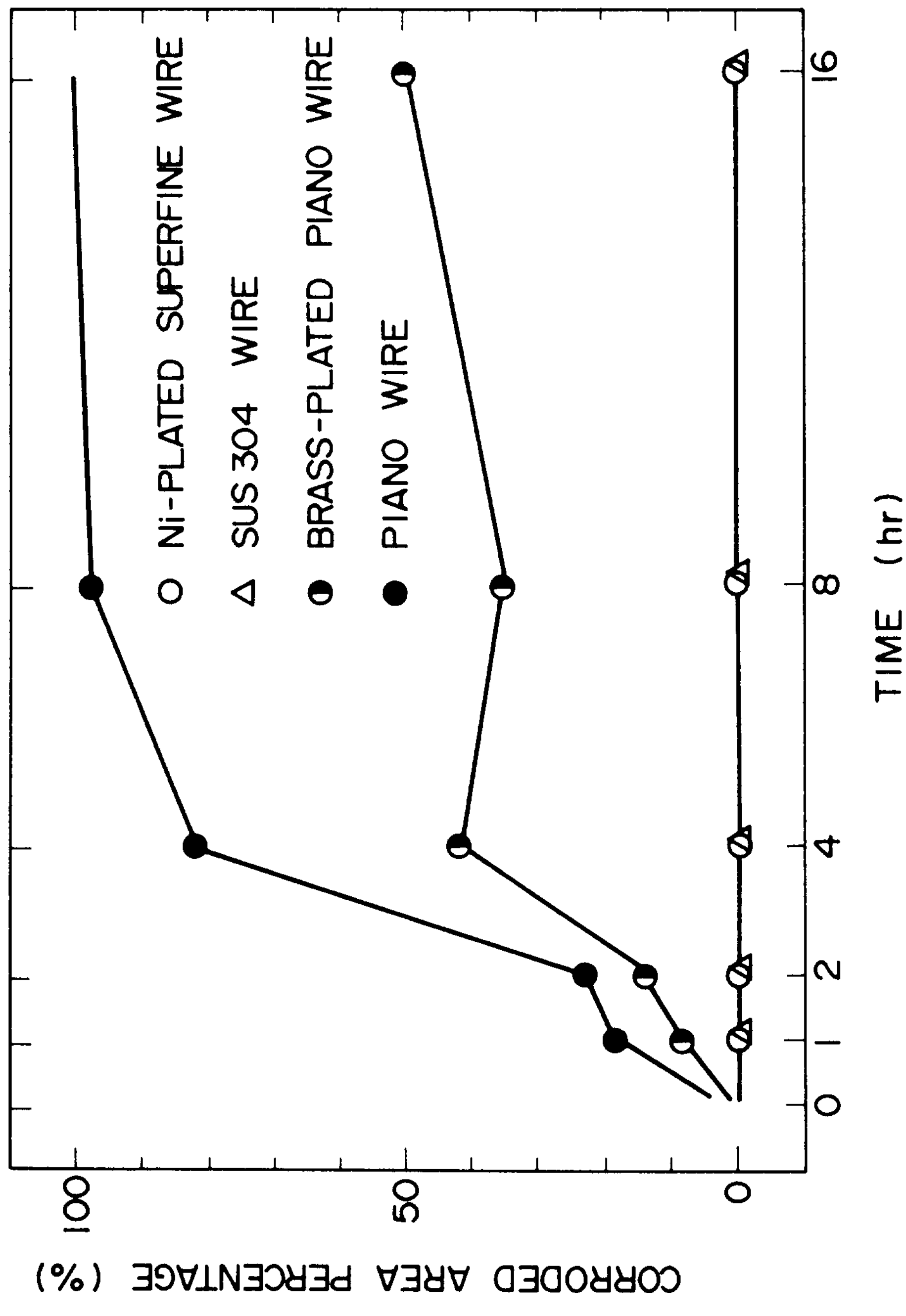
Ni-PLATED SUPERFINE WIRE
SUS 304 WIRE
BRASS-PLATED PIANO WIRE
PIANO WIRE
CORRODED AREA PERCENTAGE (%)
100
50
0
TIME (hr)
0
1
2
4
8
16

FIGURE 20

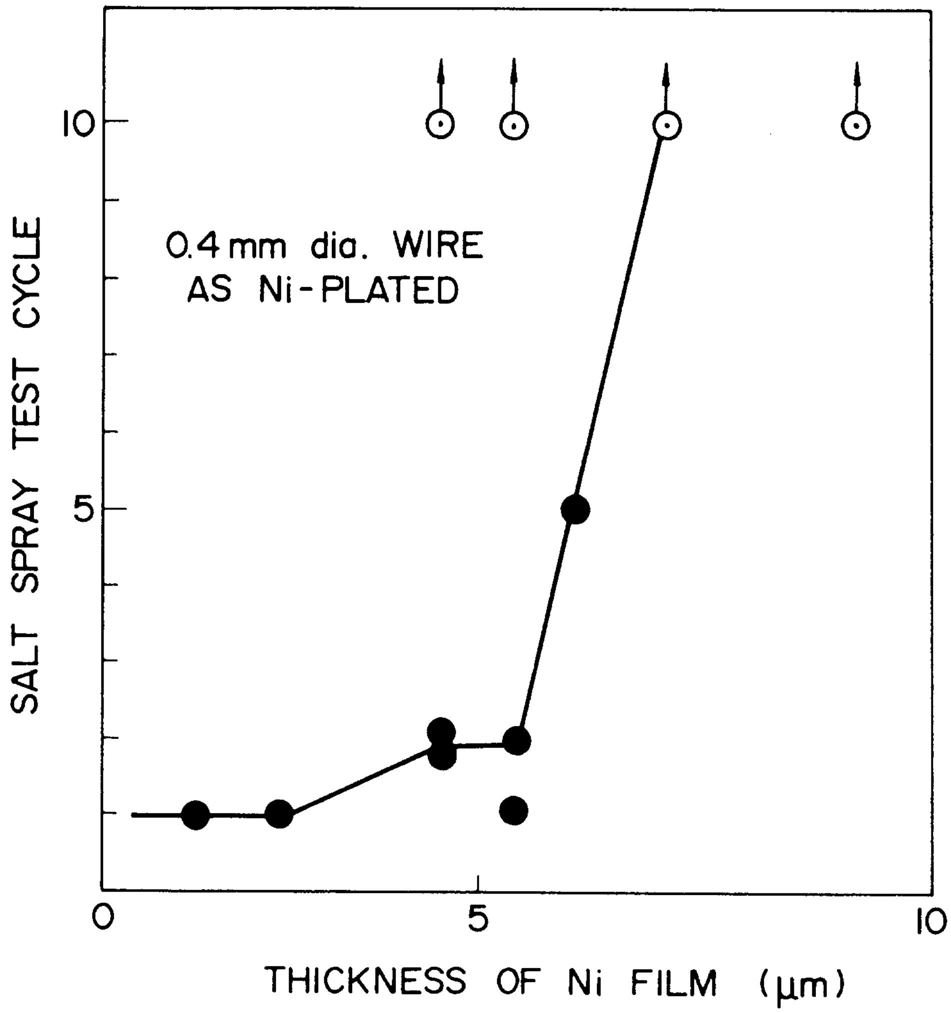
10
5
0.4 mm dia. WIRE
AS Ni-PLATED
SALT SPRAY TEST CYCLE
0
5
10
THICKNESS OF Ni FILM (μm)

FIGURE 21

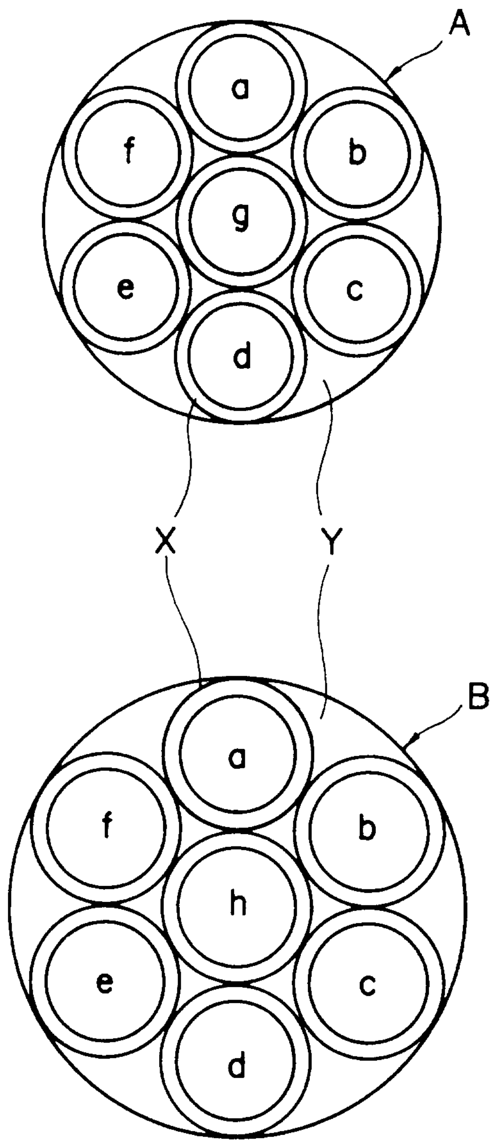

FIGURE 22

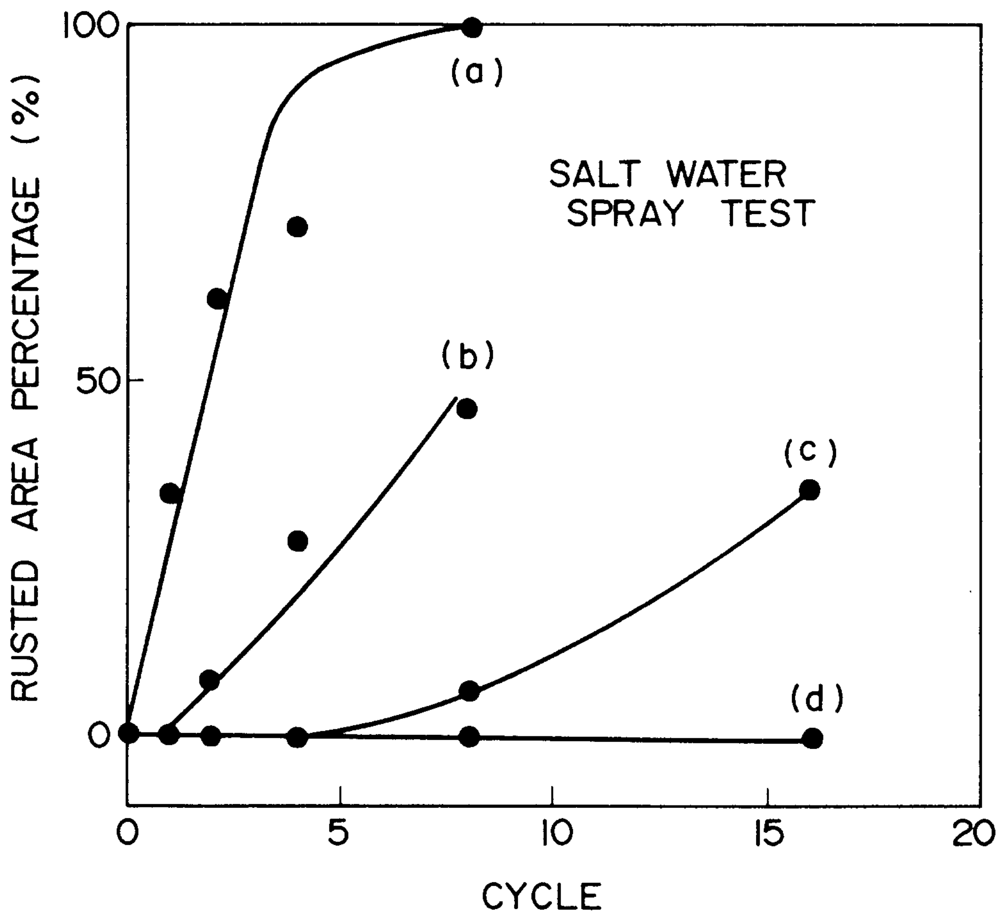
100
50
0
RUSTED AREA PERCENTAGE (%)
(a)
SALT WATER
SPRAY TEST
(b)
(c)
(d)
0
5
10
15
20
CYCLE